# EUROPEAN PATENT SPECIFICATION

(11) **EP 2 573 764 B1**
(45) Date of publication and mention of the grant of the patent: **18.06.2014**
(21) Application number: 12185276.8
(22) Date of filing: 20.09.2012
(51) Int. Cl.: G10L 15/22

(54) **Consolidating speech recognition results**
Zusammenfassung von Spracherkennungsergebnissen
Consolidation des résultats de reconnaissance vocale

(30) Priority: 20.09.2011 US 201113236942
(43) Date of publication of application: 27.03.2013
(73) Proprietor: APPLE INC., Cupertino, CA 95014 (US)
(72) Inventor: Batea-Forte, Marcello, Cupertino, California 95014 (US); Winarsky, David, Cupertino, California 95014 (US)
(74) Representative: Gillard, Matthew Paul

(56) References cited:
- US-A1- 2007 033 003
- US-A1- 2008 052 073
- US-A1- 2010 057 457
- US-B1- 6 282 507

## Description

### FIELD OF THE INVENTION

The present invention relates to automated electronic systems and methods for recognizing and interpreting spoken input.

### BACKGROUND

In many situations, speech is a preferred mechanism for providing input to an electronic device. In particular, spoken input can be useful in situations where it may be difficult or unsafe to interact with an electronic device via a screen, keyboard, mouse, or other input device requiring physical manipulation and/or viewing of a display screen. For example, while driving a vehicle, a user may wish to provide input to a mobile device (such as a smartphone) or car-based navigation system, and may find that speaking to the device is the most effective way to provide information, enter data, or control operation of the device. In other situations, a user may find it convenient to provide spoken input because he or she feels more comfortable with a conversational interface that more closely mimics an interaction with another human. For example, a user may wish to provide spoken input when interacting with an intelligent automated assistant as described in related U.S. Utility Patent Application Serial No. 12/987,982 for "Intelligent Automated Assistant," filed January 10, 2011.

Speech recognition can be used in many different contexts. For example, some electronic systems provide a voice-based user interface that allows a user to control operation of a device via spoken input. Speech recognition can also be used in interactive voice recognition (IVR) telephone systems, wherein a user can navigate a menu of choices and can provide input, for example to purchase an airline ticket, check movie times, and the like. Speech recognition is also used in many forms of data entry, including writing via a word processor.

Various known techniques are available for interpreting spoken input and converting it into text. Acoustic modeling can be used for generating statistical representations of sounds, or phonemes, forming individual words or phrases. Audio input can be compared with these statistical representations to make determinations as to which words or phrases were intended. In many systems, a limited vocabulary is defined in some way, so as to increase the likelihood of a successful match. In some systems, language modeling can be used to help predict the next word in a sequence of spoken words, and thereby reduce ambiguity in the results generated by the speech recognition algorithm.

Some examples of speech recognition systems that use acoustic and/or language models are: CMU Sphinx, developed as a project of Carnegie Mellon University of Pittsburgh, Pennsylvania; Dragon speech recognition software, available from Nuance Communications of Burlington, Massachusetts; and Google Voice Search, available from Google, Inc. of Mountain View, California.

Regardless of the speech recognition technique used, it is necessary, in many cases, to disambiguate between two or more possible interpretations of the spoken input. Often, the most expedient approach is to ask the user which of several possible interpretations was intended. In order to accomplish this, the user may be presented with some set of possible candidate interpretations of the spoken input, and prompt the user to select one. Such prompting can take place via a visual interface, such as one presented on a screen, or via an audio interface, wherein the system reads off the candidate interpretations and asks the user to select one. Approaches for presenting candidate interpretations to a user and selection by the user can for example be found in US 2010/0057457 A1 and US 6282507 B1.

When speech recognition is applied to a set of words that were spoken in succession, such as in a sentence, several candidate interpretations may exist. The set of candidate interpretations can be presented as a set of sentences. In many cases, portions of the candidate sentences are similar (or identical) to one another, while other portions differ in some way. For example, some words or phrases in the spoken sentence may be easier for the system to interpret than others; alternatively, some words or phrases may be associated with a greater number of candidate interpretations than other words or phrases. In addition, the number of total permutations of candidate interpretations may be relatively high because of the total number of degrees of freedom in the set of candidate interpretations, since different portions of the sentence may each be interpreted a number of different ways. The potentially large number of permutations, along with different numbers of candidates for different parts of a sentence, can cause the presentation of candidate sentences to the user for selection to be overwhelming and difficult to navigate.

What is needed is a mechanism for presenting candidate sentences to a user of a speech recognition system, wherein the presentation of candidate sentences is simplified and streamlined so as to avoid presenting an overwhelming number of options to the user. What is further needed is a mechanism for presenting candidate sentences in a manner that reduces redundant and confusing information.

### SUMMARY OF THE INVENTION

Various embodiments of the present invention implement an improved mechanism for presenting a set of candidate interpretations in a speech recognition system. Redundant elements are minimized or eliminated by a process of consolidation, so as to simplify the options presented to the user.

The invention can be implemented in any electronic device configured to receive and interpret spoken input. Candidate interpretations resulting from application of speech recognition algorithms to the spoken input are presented in a consolidated manner that reduces or eliminates redundancy. The output of the system is a list of candidate interpretations presented as a set of distinct options for those portions of the sentence that differ among the candidate interpretations, while suppressing duplicate presentations of those portions that are identical from one candidate to another.

According to various embodiments, the consolidated list of candidate interpretations is generated by first obtaining a raw list of candidate interpretations for the speech input. Each candidate interpretation is subdivided into time-based portions, forming a grid. Those time-based portions that duplicate portions from other candidate interpretations are removed from the grid. A user interface is provided that presents the user with an opportunity to select among the candidate interpretations; the user interface is configured to present these alternatives while avoiding presenting duplicate elements.

According to various embodiments, any of a number of mechanisms can be used for presenting the candidate interpretations to the user and for accepting input as to the user's selection. Such mechanisms can include graphical, textual, visual and/or auditory interfaces of any suitable type. In some embodiments, the user can be given an opportunity to select individual elements from different candidate interpretations; for example a first portion of a sentence can be selected from a first candidate interpretation, while a second portion of the sentence can be selected from a second candidate interpretation. The final result can then be assembled from the selected portions.

Once the user has selected among candidate interpretations, the selected text can be displayed, stored, transmitted, and/or otherwise acted upon. For example, in one embodiment, the selected text can be interpreted as a command to perform some action. Alternatively, the selected text can be stored as a document or a portion of a document, as an email or other form of message, or any other suitable repository or medium for text transmission and/or storage.

These various embodiments of the present invention, as described herein, provide mechanisms for improving the process of disambiguating among candidate interpretations of speech input. In particular, such embodiments improve the user experience by reducing the burden and complexity of providing input to make selections among such candidate interpretations.

In accordance with some implementations, a method includes, at a processor, receiving a list of candidate interpretations of spoken input. The method also includes forming a grid of tokens from the received list, the grid being organized into a plurality of rows and a plurality of columns. The method also includes splitting the grid into a set of column groups based on timing information, each column group comprising a plurality of token groups, each token group comprising at least one token. The method also includes responsive to detecting duplicated token groups in the grid, removing the duplicated token groups to generate a consolidated grid. In some implementations, the method includes, at an output device, outputting the candidate interpretations based on the consolidated grid. The method further includes causing an output device to output the candidate interpretations based on the consolidated grid. groups to form a consolidated list of candidates. The method also includes transmitting a representation of the consolidated list of candidates from the server to a client.

In accordance with some implementations there is a computer readable storage medium according to claim 15.

In accordance with some implementations, an electronic device includes a candidate interpretation receiving unit configured to receive a list of candidate interpretations of spoken input. The electronic device also includes a processing unit. The processing unit is configured to: form a grid of tokens from the received list, the grid being organized into a plurality of rows and a plurality of columns; split the grid into a set of column groups based on timing information, each column group comprising a plurality of token groups, and each token group comprising at least one token; and, responsive to detecting duplicated token groups in the grid, remove the duplicated token groups to generate a consolidated grid. The electronic device includes an output unit configured to cause an output device to output the candidate interpretations based on the consolidated grid. In some implementations, the output unit is configured to output the candidate interpretations based on the consolidated grid.

### BRIEF DESCRIPTION OF THE IMAGES

The accompanying drawings illustrate several embodiments of the invention and, together with the description, serve to explain the principles of the invention according to the embodiments. One skilled in the art will recognize that the particular embodiments illustrated in the drawings are merely exemplary, and are not intended to limit the scope of the present invention as defined by the appended claims.
Fig. 1 is a block diagram depicting a hardware architecture for a system for generating consolidated speech recognition results according to one embodiment of the present invention.
Fig. 2 is a block diagram depicting a hardware architecture for a system for generating consolidated speech recognition results in a client/server environment according to one embodiment of the present invention.
Fig. 3 is a block diagram depicting data flow in a system for generating consolidated speech recognition results in a client/server environment according to one embodiment of the present invention.
Fig. 4A is a flowchart depicting overall operation of a speech recognition processor to generate a consolidated list of candidate results according to one embodiment of the present invention.
Fig. 4B depicts an example of a list of candidate interpretations as may be generated by a speech recognizer, before being processed according to the present invention, along with a detail of one candidate interpretation with timing codes.
Fig. 5A is a flowchart depicting a method of forming a grid of tokens from a list of candidate interpretations, according to one embodiment of the present invention.
Fig. 5B depicts an example of a grid of tokens generated by the method depicted in Fig. 5A, according to one embodiment of the present invention.
Fig. 6A is a flowchart depicting a method of splitting a grid into a set of column groups based on timing information, according to one embodiment of the present invention.
Fig. 6B depicts an example of a list of column groups generated by the method depicted in Fig. 6A, according to one embodiment of the present invention.
Fig. 7A is a flowchart depicting a method of removing duplicates in column groups, according to one embodiment of the present invention.
Fig. 7B depicts an example of a de-duplicated list of column groups generated by the method depicted in Fig. 7A, according to one embodiment of the present invention.
Fig. 8A is a flowchart depicting a method of splitting off shared tokens, according to one embodiment of the present invention.
Fig. 8B is a flowchart depicting a method of splitting off tokens that appear at the beginning of all token phrases in a column group, according to one embodiment of the present invention.
Fig. 8C is a flowchart depicting a method of splitting off tokens that appear at the end of all token phrases in a column group, according to one embodiment of the present invention.
Figs. 8D, 8E, and 8F depict an example of splitting off shared tokens according to the method depicted in Fig. 8A, according to one embodiment of the present invention.
Fig. 9A is a flowchart depicting a method of removing excess candidates, according to one embodiment of the present invention.
Figs. 9B through 9F depict an example of removing excess candidates according to the method depicted in Fig. 9A, according to one embodiment of the present invention.
Fig. 10 is a flowchart depicting a method of operation for a user interface for presenting candidates to a user and for accepting user selection of candidates, according to one embodiment of the present invention.
Figs. 11A through 11D depict an example of user interface for presenting candidates to a user and for accepting user selection of candidates, according to one embodiment of the present invention.
Fig. 12A is a flowchart depicting an alternative method of forming a grid of tokens from a list of candidate interpretations, according to one embodiment of the present invention.
Figs. 12B through 12D depict an example of generating a grid of tokens by the alternative method depicted in Fig. 12A, according to one embodiment of the present invention.
Figs. 13A through 13C depict another example of generating a grid of tokens by the alternative method depicted in Fig. 12A, according to one embodiment of the present invention.
Figs. 14A through 14E depict an example of extending bordering tokens, according to one embodiment of the present invention.
Fig. 15 illustrates a functional block diagram of an electronic device in accordance with some embodiments.
Fig. 16 illustrates a functional block diagram of an electronic device in accordance with some embodiments.
Fig. 17 illustrates a functional block diagram of an electronic device in accordance with some embodiments.

### DETAILED DESCRIPTION

### System Architecture

According to various embodiments, the present invention can be implemented on any electronic device or on an electronic network comprising any number of electronic devices. Each such electronic device may be, for example, a desktop computer, laptop computer, personal digital assistant (PDA), cellular telephone, smartphone, music player, handheld computer, tablet computer, kiosk, game system, or the like. As described below, the present invention can be implemented in a stand-alone computing system or other electronic device, or in a client/server environment implemented across an electronic network. An electronic network enabling communication among two or more electronic devices may be implemented using well-known network protocols such as Hypertext Transfer Protocol (HTTP), Secure Hypertext Transfer Protocol (SHTTP), Transmission Control Protocol / Internet Protocol (TCP/IP), and/or the like. Such a network may be, for example, the Internet or an Intranet. Secure access to the network may be facilitated via well-known techniques such as a Virtual Private Network (VPN). The invention can also be implemented in a wireless device using any known wireless communications technologies and/ or protocols, including but not limited to WiFi, 3rd generation mobile telecommunications (3G), Universal Mobile Telecommunications System (UMTS), Wideband Code Division Multiple Access (W-CDMA), Time Division Synchronous Code Division Multiple Access (TD-SCDMA), Evolved High-Speed Packet Access (HSPA+), CSMA2000, Edge, Digital Enhanced Cordless Telecommunications (DECT), BlueTooth, Mobile Worldwide Interoperability for Microwave Access (WiMAX), Long Term Evolution (LTE), LTE Advanced, or any combination thereof.

Although the invention is described herein in the context of a system for receiving spoken word input and presenting candidate interpretations for user selection, one skilled in the art will recognize that the techniques of the present invention can be implemented in other contexts, and indeed in any system where it is desirable to present a list of alternatives, wherein some portion(s) of the alternatives are duplicated among two or more alternatives. Accordingly, the following description is intended to illustrate various embodiments of the invention by way of example, rather than to limit the scope of the claimed invention as defined by the appended claims.

In one embodiment, the present invention is implemented as a software application running on a computing device or other electronic device. In another embodiment, the present invention is implemented as a software application running in a client/server environment comprising at least one server and at least one client machine. The client machine can be any suitable computing device or other electronic device, and may communicate with the server using any known wired and/or wireless communications protocol.

For example, the invention can be implemented as part of an intelligent automated assistant that operates on a smartphone, computer, or other electronic device. An example of such an intelligent automated assistant is described in related U.S. Utility Patent Application Serial No. 12/987,982 for "Intelligent Automated Assistant," filed January 10, 2011. In one embodiment, such an intelligent automated assistant can X be implemented as an application, or "app", running on a mobile device or other electronic device; alternatively, the functionality of the assistant can be implemented as a built-in component of an operating system. However, one skilled in the art will recognize that the techniques described herein can be implemented in connection with other applications and systems as well, and/or on any other type of computing device, combination of devices, or platform.

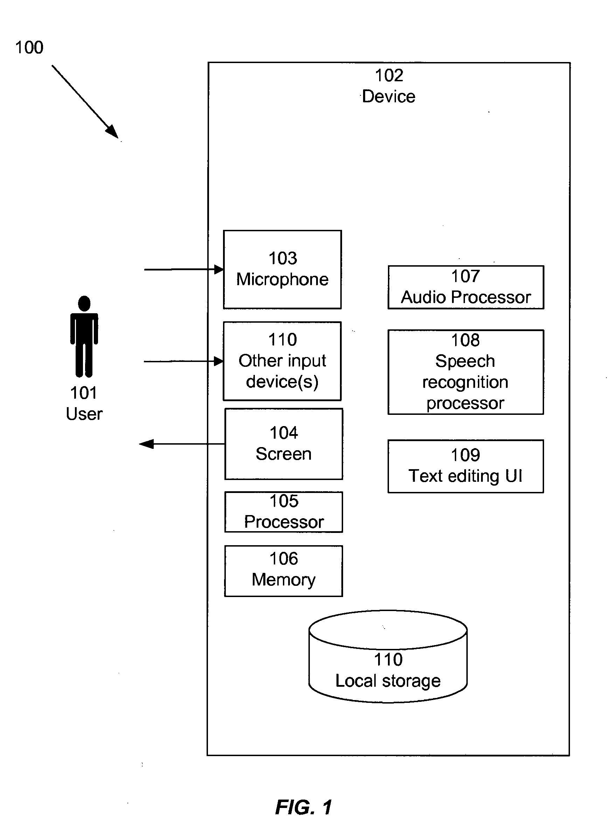

Referring now to Fig. 1, there is shown a block diagram depicting a hardware architecture for a system 100 for generating consolidated speech recognition results in a stand-alone device 102, according to one embodiment.

System 100 includes device 102 having processor 105 for executing software for performing the steps described herein. In Fig. 1, a separate audio processor 107 and speech recognition processor 108 are depicted. Audio processor 107 may perform operations related to receiving audio input and converting it to a digitized audio stream. Speech recognition processor 108 may perform operations related to speech recognition as well as generating and consolidating candidate interpretations of speech input, as described herein. However, the functionality described herein may be implemented using a single processor or any combination of processors. Accordingly, the specific set of processors depicted in Fig. 1 is merely exemplary, and any of the processors can be omitted, and/or additional processors added.

Device 102 may be any electronic device adapted to run software; for example, device 102 may be a desktop computer, laptop computer, personal digital assistant (PDA), cellular telephone, smartphone, music player, handheld computer, tablet computer, kiosk, game system, or the like. In one embodiment, computing device 102 may be an iPhone or iPad available from Apple Inc. of Cupertino, California. In one embodiment, device 102 runs any suitable operating system such as iOS, also available from Apple Inc. of Cupertino, California; Mac OS X, also available from Apple Inc. of Cupertino, California; Microsoft Windows, available from Microsoft Corporation of Redmond, Washington; Android, available from Google, Inc. of Mountain View, California; or the like.

The techniques of the present invention can be implemented in a software application running on device 102 according to well-known techniques. For example, the software application may be a stand-alone software application or "app", or a web-based application or website that is accessible via a browser such as Safari, available from Apple Inc. of Cupertino, California, or by specialized web-based client software.

In one embodiment, device 102 includes microphone 103 or other audio input device for receiving spoken input from user 101. Device 102 can also include any other suitable input device(s) 110, including for example a keyboard, mouse, touchscreen, trackball, trackpad, five-way switch, voice input device, joystick, and/or any combination thereof. Such input device(s) 110 allow user 101 to provide input to device 102, for example to select among candidate interpretations of spoken input. In one embodiment, device 102 includes screen 104 or other output device for displaying or otherwise presenting information to user 101, including candidate interpretations of spoken input. In one embodiment, screen 104 can be omitted; for example, candidate interpretations of spoken input can be presented via a speaker or other audio output device (not shown), or using a printer (not shown), or any other suitable device.

In one embodiment, text editing user interface (UI) 109 is provided, which causes candidate interpretations to be presented to user 101 (as text) via screen 104. User 101 interacts with UI 109 to select among the candidate interpretations, and/or to enter his or her own interpretations, as described herein.

For example, in the embodiment described in detail herein, screen 104 is a touch-sensitive screen (touchscreen). UI 109 causes candidate interpretations to be presented on touchscreen 104; user can select among the interpretations by tapping on areas of screen 104 that indicate that alternative interpretations are available. UI 109 interprets user's 101 input to update displayed interpretations of spoken input accordingly.

Processor 105 can be a conventional microprocessor for performing operations on data under the direction of software, according to well-known techniques. Memory 106 can be random-access memory having a structure and architecture as are known in the art, for use by processor 105 in the course of running software. Local storage 110 can be any magnetic, optical, and/or electrical storage device for storage of data in digital form; examples include flash memory, magnetic hard drive, CD-ROM, and/or the like. In one embodiment, local storage 110 is used for storing audio files, candidate interpretations, and the like, as well as storing software which is run by processor 105 in the course of performing the operations described herein.

One skilled in the art will recognize that the particular arrangement of hardware elements shown in Fig. 1 is merely exemplary, and that the invention can be implemented using different hardware elements configured in any of a number of different ways. Thus, the particular architecture shown in Fig. 1 is merely illustrative and is not intended to limit the scope of the invention as defined by the appended claims in any way.

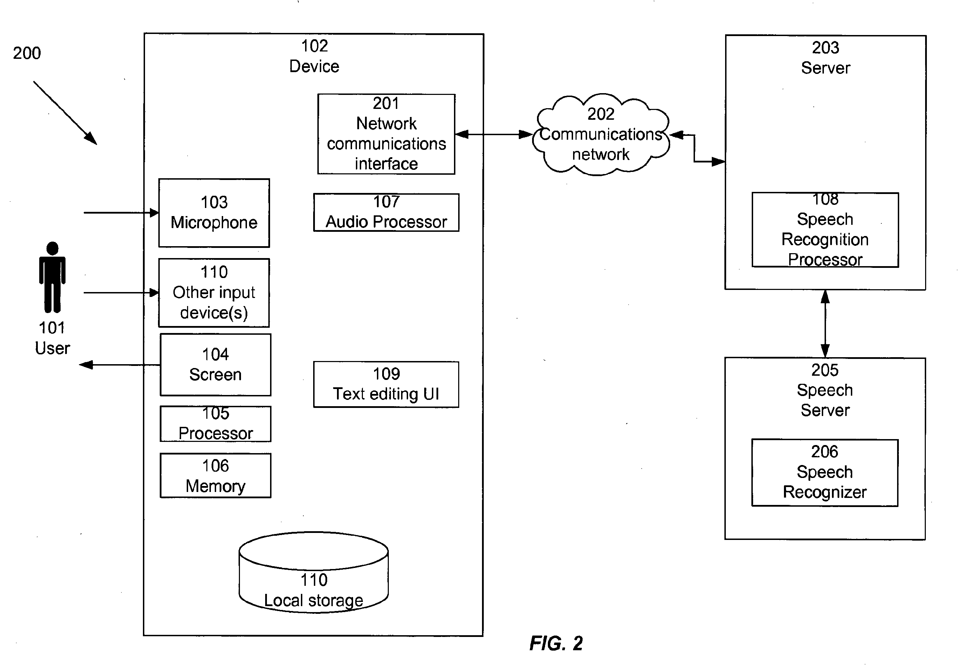

Referring now to Fig. 2, there is shown a block diagram depicting a hardware architecture for practicing the present invention in a client/server environment according to one embodiment of the present invention. Such an architecture can be used, for example, for implementing the techniques of the present invention in connection with a server-based speech recognition processor 108. Audio can be received at device 102 and transmitted to server 203 via communications network 202. In one embodiment, network 202 may be a cellular telephone network capable of transmitting data, such as 3G network; alternatively, network 202 may be the Internet or any other suitable network. Speech recognition processor 108 at server 203 generates candidate interpretations of the audio, and generates, processes, and consolidates candidate interpretations according to the techniques described herein. The consolidated candidate interpretations are transmitted back to device 102 via network 202, for presentation on screen 104. Text editing UI 109 handles the presentation of the interpretations and the mechanics of accepting user input to select among the interpretations.

In one embodiment, server 203 communicates with speech recognizer 206 running at speech server 205, which performs analysis of the audio stream collected by device 102 and generates raw candidate interpretations. Speech recognizer 206 may use any conventional techniques for interpreting audio input. For example, in one embodiment, speech recognizer 206 can be a Nuance speech recognizer, available from Nuance Communications, Inc. of Burlington, Massachusetts. Alternatively, speech server 205 can be omitted, and all speech recognition functions can be performed at server 203 or at any other arrangement of one or more server(s) and/or other components.

Network communications interface 201 is an electronic component that facilitates communication of data to and from other devices over communications network 202. Servers 203, 205 communicate with device 102 and/or with one another over network 202, and in one embodiment can be located remotely or locally with respect to device 102 and/ or with respect to one another.

One skilled in the art will recognize that the present invention may be implemented using a distributed software architecture if appropriate. One skilled in the art will further recognize that the client/server architecture shown in Fig. 2 is merely exemplary, and that other architectures can be used to implement the present invention, including architectures that may or may not be web-based. In general, the particular division of functions and operations among the various components depicted in Fig. 2 is merely exemplary; one skilled in the art will recognize that any of the operations and steps described herein can be performed by any other suitable arrangement of components. Thus, the particular architecture shown in Fig. 2 is merely illustrative and is not intended to limit the scope of the invention as defined by the appended claims in any way.

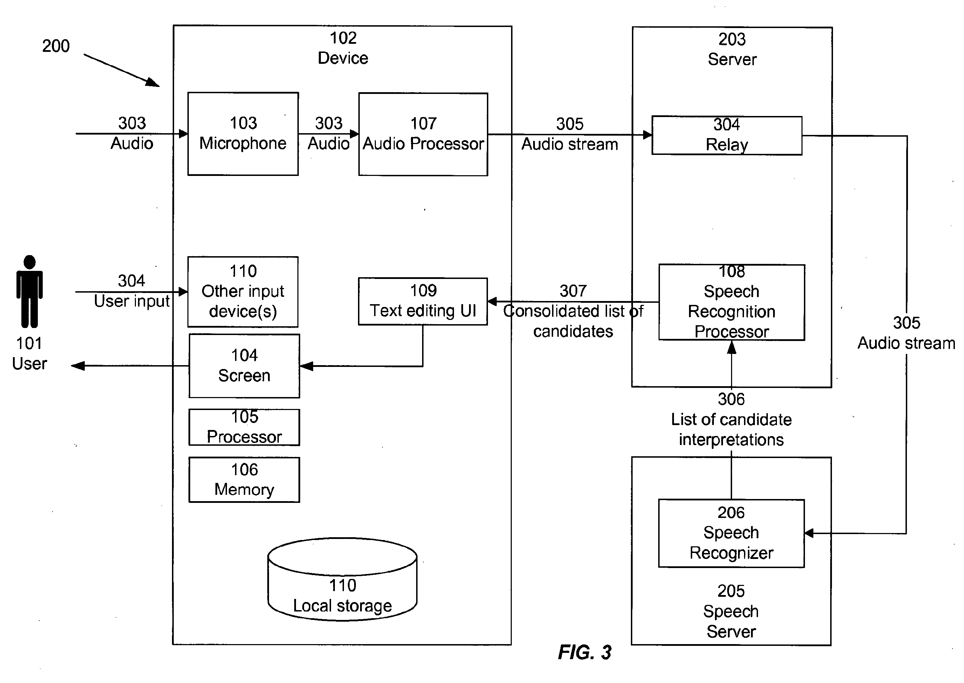

Referring now to Fig. 3, there is shown a block diagram depicting data flow in a system 200 similar to that depicted in Fig. 2. For clarity, some components of system 200 are omitted from Fig. 3.

Audio 303, which may include spoken words from user 101, is captured by microphone 103 of device 102. Audio processor 107 converts audio 303 into audio stream 305, which is a digital signal representing the original audio 303. Conversion to digital form in this manner is well known in the art.

Device 102 transmits audio stream 305 to server 203. Relay 304 in server 203 transmits audio stream 305 to speech recognizer 206 running at speech server 205. As described above, all such transmission can take place over a cellular telephone network or any other suitable wired or wireless communications network. As described above, speech recognizer 206 may be a Nuance speech recognizer 206. Speech recognizer 206 generates a list 306 of candidate interpretations of spoken input found in audio stream 305 and transmits list 306 to server 203. Such candidate interpretations are also referred to herein as "candidates". Speech recognition processor 108 generates a consolidated list 307 of candidates according to the techniques described herein, and transmits list 307 to device 102.

Text editing UI 109 presents list 307 to user 101 via screen 104, according to techniques described herein, and interprets user input 304 to select among candidate interpretations as described herein.

Once user 101 has selected among candidate interpretations, the selected text can be displayed, stored, transmitted, and/or otherwise acted upon. For example, in one embodiment, the selected text can be interpreted as a command to perform some action on device 102 or on another device. Alternatively, the selected text can be stored as a document or a portion of a document, as an email or other form of message, or any other suitable repository or medium for text transmission and/or storage.

### Method of Operation

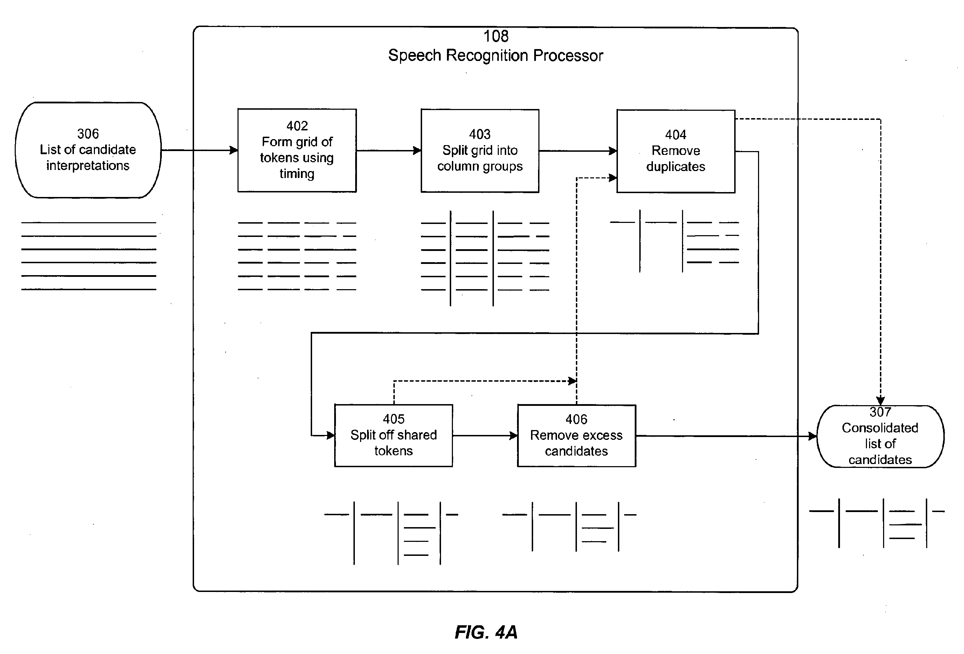

Referring now to Fig. 4A, there is shown a flowchart depicting overall operation of a speech recognition processor to generate a consolidated list of candidate results according to one embodiment of the present invention. In one embodiment, the steps depicted in Fig. 4A may be performed by speech recognition processor 108 of Fig. 1 or Fig. 2; alternatively, these steps may be performed by any other suitable component or system.

Results received from speech recognizer 206 include a list 306 of candidate interpretations represented, for example, as sentences. As discussed above, these candidate interpretations often contain portions that are identical to one another. Presenting the candidate interpretations including these duplicative portions can overwhelm user 101 and can contribute to a diminished user experience by making the system more difficult to operate. The steps depicted in Fig. 4A provide a methodology for consolidating candidate interpretations so that user 101 can more easily select the intended text.

Speech recognition processor 108 receives list 306 of candidate interpretations of audio input from speech recognizer 206. Each candidate interpretation, or candidate, contains a number of words; for example, each candidate interpretation may be a sentence or sentence-like structure. Each candidate interpretation represents one possible interpretation of the spoken input, generated by well-known mechanisms of speech recognition. In one embodiment, speech recognition processor 108 also receives word-level timing, indicating the start and end point within the audio stream for each word (or phrase) in each candidate interpretation. Such word-level timing can be received from speech recognizer 206 or from any other suitable source. In an alternative embodiment, no timing information is used; such an embodiment is described in further detail below.

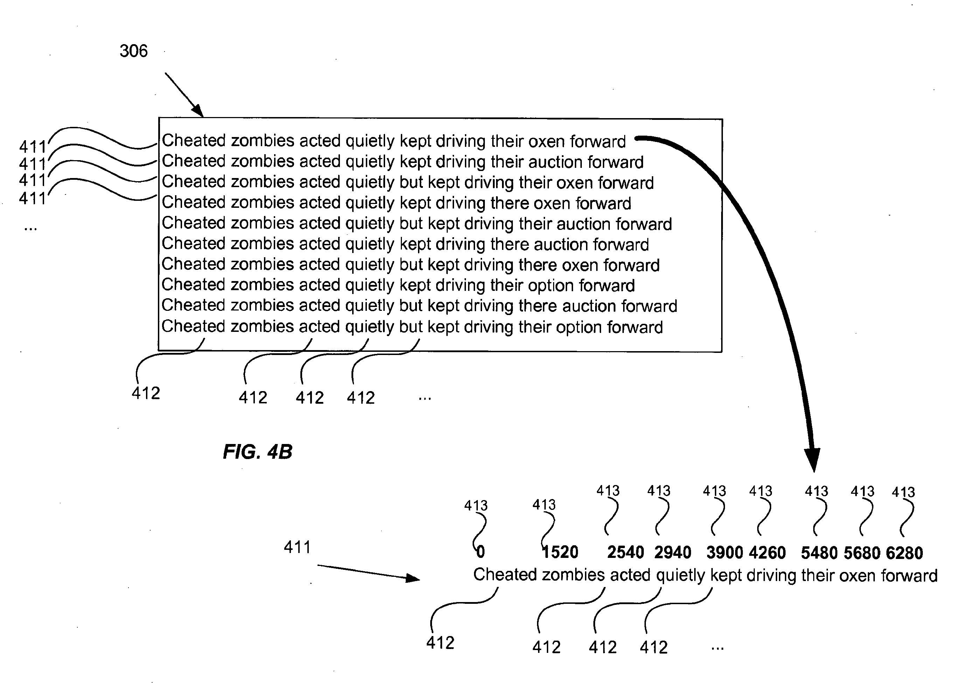

Referring now also to Fig. 4B, there is shown an example of a list 306 of candidates 411 as may be generated by speech recognizer 206 from a single audio stream, before being processed by the techniques described herein. Each candidate 411 includes a number of tokens 412, which may be words and/or phrases. As can be seen from the example of Fig. 4B, many of the candidates 411 are similar to one another, in most cases differing by only a word or two. Presenting such a list to user 101 in this form would be overwhelming and confusing, as it would be difficult for user 101 to discern which of the many similar candidates 411 corresponds to what he or she intended. As will be seen, the system and method of the present invention generate consolidated list 307 and provide an improved interface to help user 101 select among the candidates.

Fig. 4B also includes a detail depicting one candidate 411. Timing codes 413 indicate the start time of each token 412 in candidate 411, for example in milliseconds or any other suitable unit of time. In one embodiment, each candidate 411 in list 306 includes such timing codes 413 for each of its tokens 412. The end time of each token 412 can be assumed to equal the start time of the next token 412. For clarity, the end time of the last token 412 in the row is omitted, although in some embodiments it can be specified as well.

Referring again to Fig. 4A, speech recognition processor 108 performs a number of steps on list 306 in order to generate consolidated list 307 for presentation to user 101. First, a grid of individual words or phrases (referred to herein as tokens) is formed 402 from list 306, using timing information. The grid is then split 403 into independent column groups based on the timing information. In one embodiment, this is performed by identifying the smallest possible columns that do not break individual tokens into two or more parts. Duplicates are then removed 404 from each column, resulting in a consolidated list 307 of candidates.

In one embodiment, additional steps can be performed, although such steps can be omitted. For example, in one embodiment, a determination is made as to whether all entries in a column start or end with the same token. If so, the column can be split 405 into two columns. Step 404 can then be reapplied in order to further simplify consolidated list 307.

In one embodiment, if a determination is made that consolidated list 307 still contains too many candidates, excess candidates can be removed 406. Steps 404 and/or 405 can then be reapplied in order to further simplify consolidated list 307.

Each of the steps depicted in Fig. 4A will be described in more detail below.

### Form Grid of Tokens 402

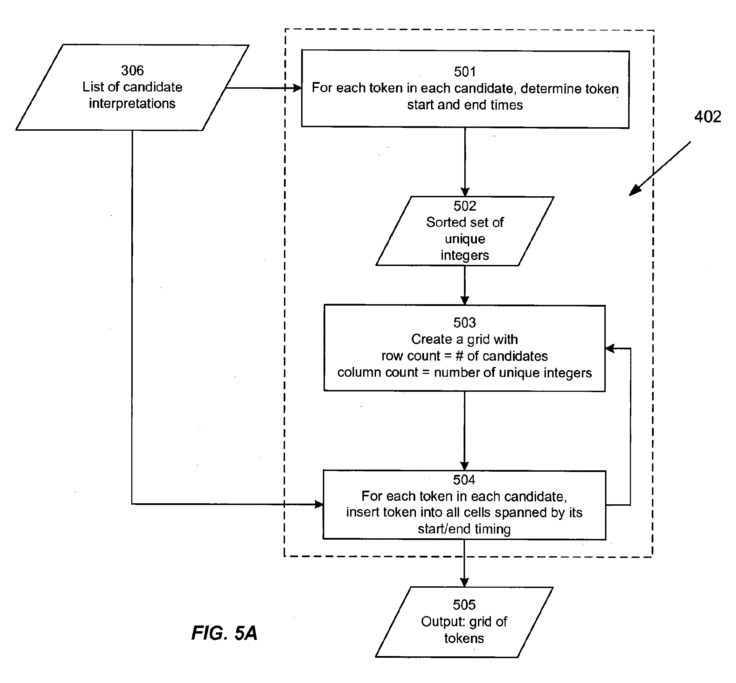

Referring now to Fig. 5A, there is shown a flowchart depicting a method of forming grid 505 of tokens from list 306 of candidates 411, according to one embodiment of the present invention. The method shown in Fig. 5A corresponds to step 402 of Fig. 4A.

For each token 412 in each candidate 411, the start and end times of token 412 are determined 501 based on timing codes 413 included in the data received from speech recognizer 206 or from another source. The start and end times of all tokens 412 form a set 502 of unique integers, which is sorted. From this sorted set, a grid is created 503, having a number of rows equal to the number of candidates 411 and a number of columns equal to one less than the number of unique integers in sorted set 502. Each cell in the grid is thus defined by a start and an end time. For clarity, in various Figures of the present application, the end time for the last token 412 in each row is omitted, although in some embodiments it can be specified as well.

For each token 412 in each candidate 411, the token 412 is inserted 504 into all cells spanned by the cell's start/end timing. Each token 412 spans one or more columns; a token 412 can span multiple columns if its timing overlaps the timing of other tokens 412 in other candidates 411. The result is grid 505 of tokens 412.

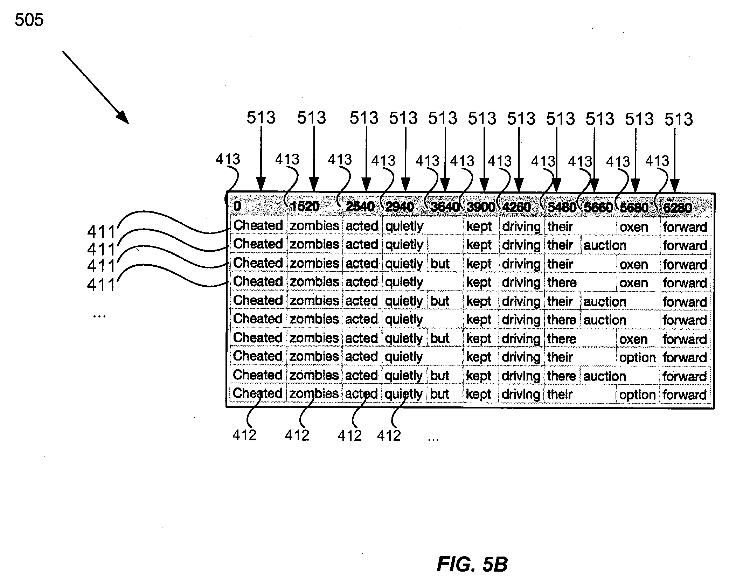

Referring now to Fig. 5B, there is shown an example of grid 505 of tokens 412 generated by the method depicted in Fig. 5A. Grid 505 contains 10 rows, corresponding to the 10 candidates 411 of Fig. 4B. Grid 505 contains 11 columns 513, corresponding to the 11 unique integers generated from timing codes 413 (assuming the end time for the last column 513 is omitted).

Each row contains tokens 412 from a single candidate 411. For each row, cells of grid 505 are populated according to timing codes 413 associated with tokens 412. As can be seen in the example of Fig. 5B, some tokens 412 span multiple columns, based on their timing codes 413.

### Split Grid into Column Groups 403

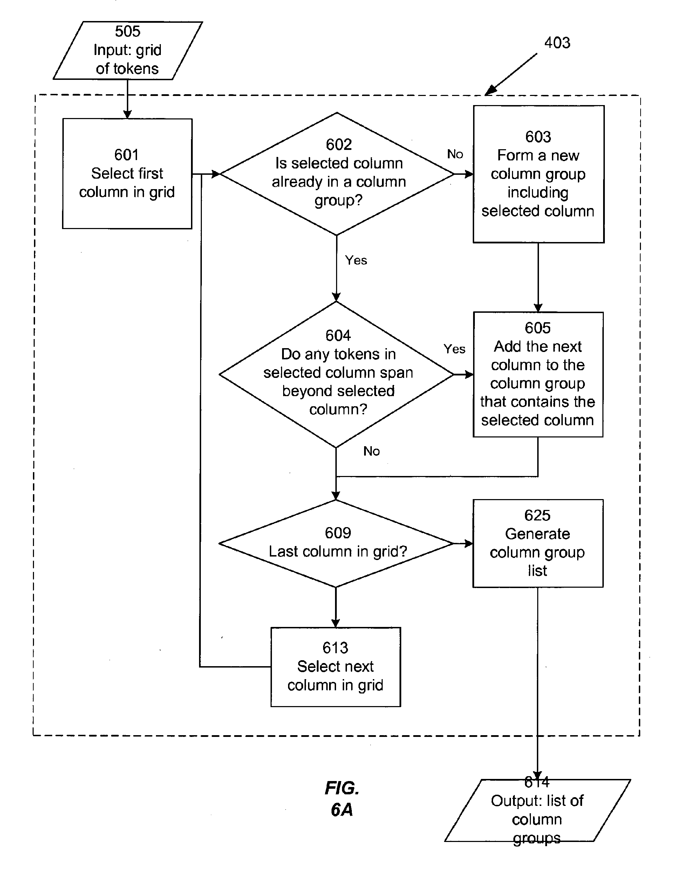

Referring now to Fig. 6A, there is shown a flowchart depicting a method of splitting grid 505 into a set of column groups based on timing information, according to one embodiment of the present invention. The method shown in Fig. 6A corresponds to step 403 of Fig. 4A.

In one embodiment, grid 505 is split by identifying the smallest possible columns that do not break individual tokens 412 into two or more parts. A first column 513 in grid 505 is selected 601. A determination is made 602 as to whether selected column 513 is already in a column group; if not, a new column group is formed 603 including selected column 513.

A determination is made 604 as to whether any tokens 412 in current column 513 have an end time that spans beyond the end time of current column 513. If so, the next column 513 in grid 505 is added to the column group that contains selected column 513.

A determination is made 609 as to whether selected column 513 is the last column in grid 505. If not, the next column 513 is selected and the method returns to step 602. If selected column 513 is the last column in grid 505, a column group list is generated 625.

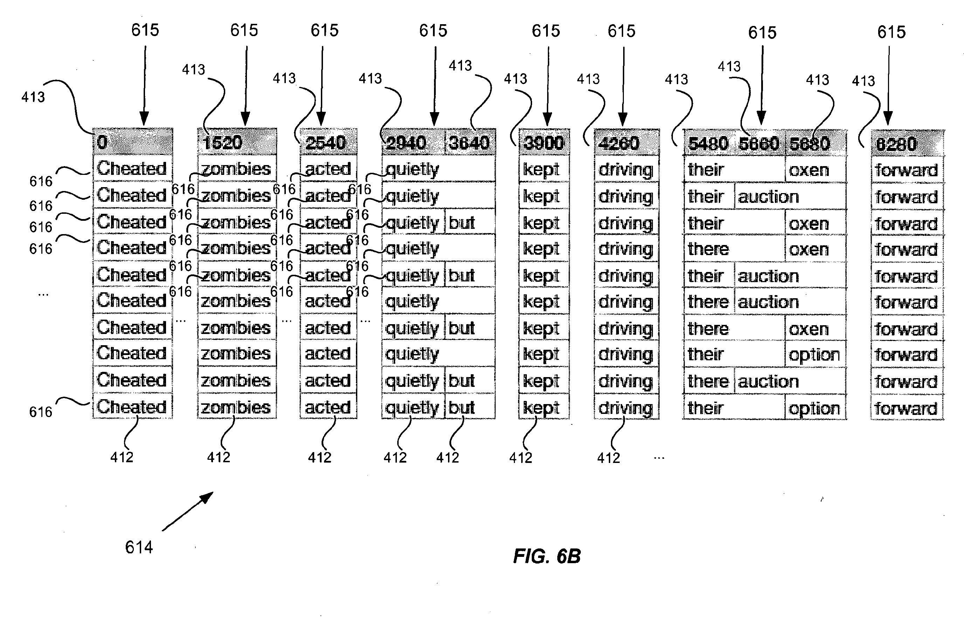

The result of the method of Fig. 6A is a list 614 of column groups 615. Referring now also to Fig. 6B, there is shown an example of list 614 of column groups 615 generated by the method depicted in Fig. 6A. In the example, list 614 contains eight column groups 615. Each column group 615 can include a single column 513 or more than one column 513. Each row within a column group 615 contains a token phrase 616 including one or more tokens 412.

### Remove Duplicates 404

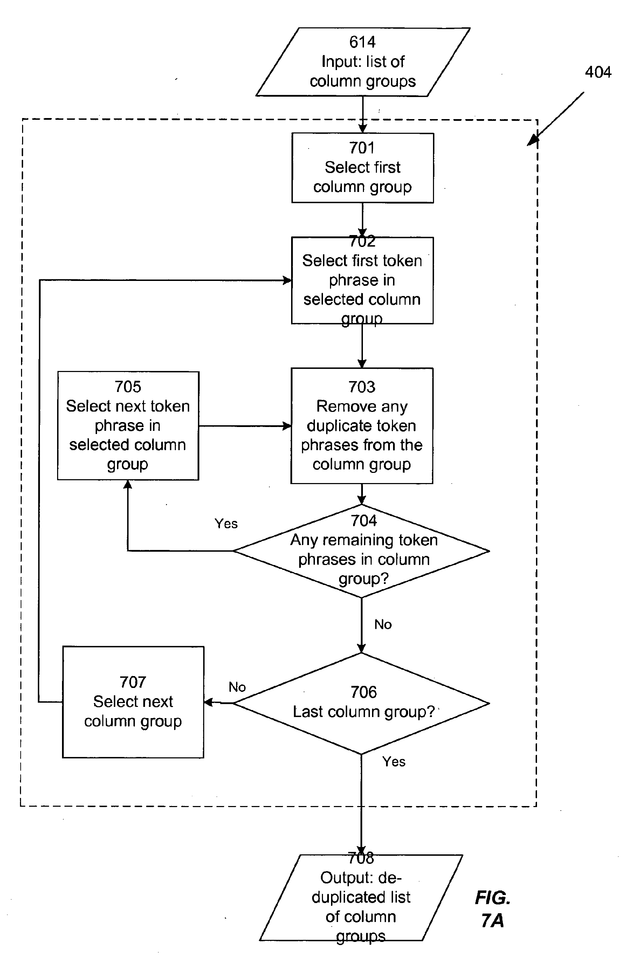

Referring now to Fig. 7A, there is shown a flowchart depicting a method of removing duplicates in list 614 of column groups 615, according to one embodiment of the present invention. The method shown in Fig. 7A corresponds to step 404 of Fig. 4A.

A first column group 615 is selected 701. A first token phrase 616 in selected column group 615 is selected 702. Any duplicate token phrases 616 in the same column group 615 are removed 703.

If, in step 704, any token phrases 616 remain in selected column group 615, the next token phrase 616 in selected column group 615 is selected 705, and the method returns to step 703.

If, in step 704, no token phrases 616 remain in selected column group 615, the method proceeds to step 706. If, in step 706, the last column group 615 has been reached, the method ends, and a de-duplicated list 708 of column groups 715 is output. If, in step 706, the last column group 615 has not been reached, the next column group 715 is selected 707 and the method returns to step 702.

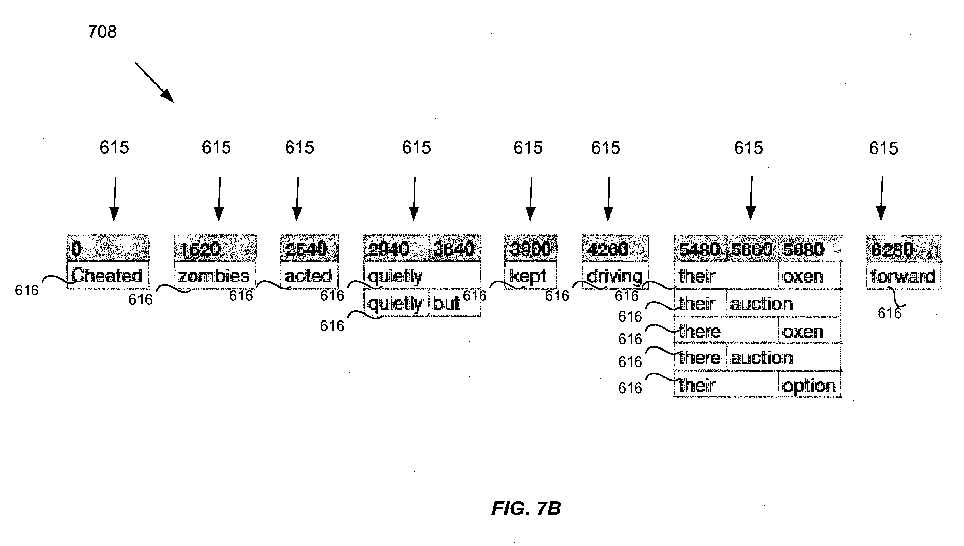

Referring now to Fig. 7B, there is shown an example of de-duplicated list 708 of column groups 615 generated by the method depicted in Fig. 7A. Here, each column group 615 only contains unique token phrases 616.

In one embodiment, de-duplicated list 708 is provided to text editing UI 109 as a consolidated list 307 of candidate interpretations which can be presented to user 101. Further details concerning the operation of text editing UI 109 and presentation of consolidated list 307 are provided herein.

In another embodiment, further processing is performed on de-duplicated list 708 before it is provided to text editing UI 109, as described below.

### Split off Shared Tokens 405

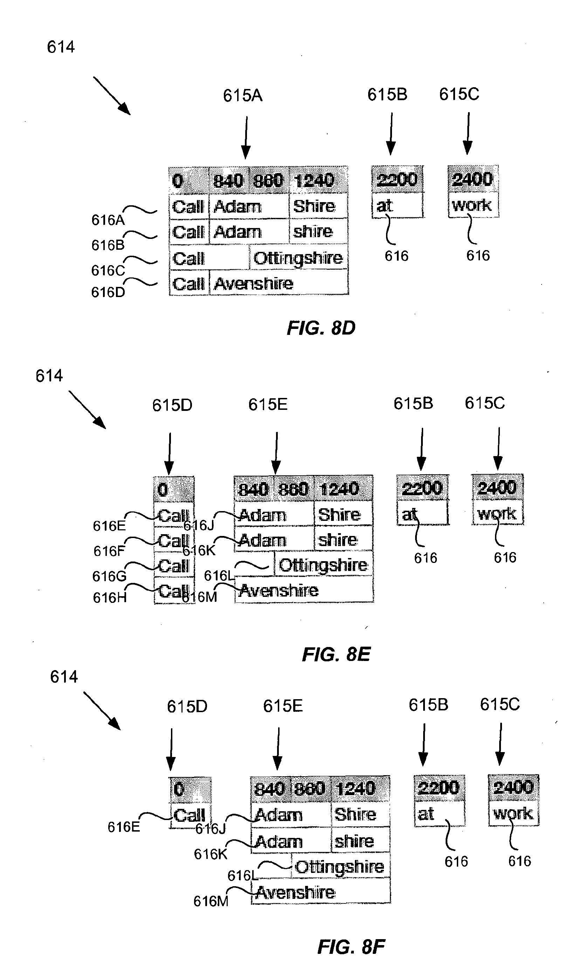

Referring now to Figs. 8D, 8E, and 8F, there is shown an example of splitting off shared tokens 412 according to one embodiment of the present invention.

In some cases, all token phrases 616 in a column group 615 may begin or end with the same token 412, even if the token phrases 616 do not have the same timing codes. For example, in Fig. 8D, column group 615A contains four token phrases 616A, 616B, 616C, 616D. An examination of these four token phrases reveals that they all start with the same token 412 (word), "Call". Accordingly, in one embodiment, column group 615A is split into two new column groups 615D and 615E. Column group 615D contains token phrases 616E, 616F, 616G, 616H which each include the token 412 "Call". Column group 615E contains token phrases 616J, 616K, 616L, 616M which each include the remaining tokens 412 from token phrases 616A, 616B, 616C, 616D, respectively. De-duplication step 404 is reapplied to remove duplicates from column group 615D, as shown in Fig. 8F.

In one embodiment, shared tokens 412 are split off only if such an operation would not create any empty alternatives. For example, referring again briefly to Fig. 7B, the word "quietly" in the fourth column group 615 could be split off, but this would result in a column group containing an empty suggestion that user 101 would not be able to see or select. Accordingly, in one embodiment, in such a situation, the shared token 412 is not split off.

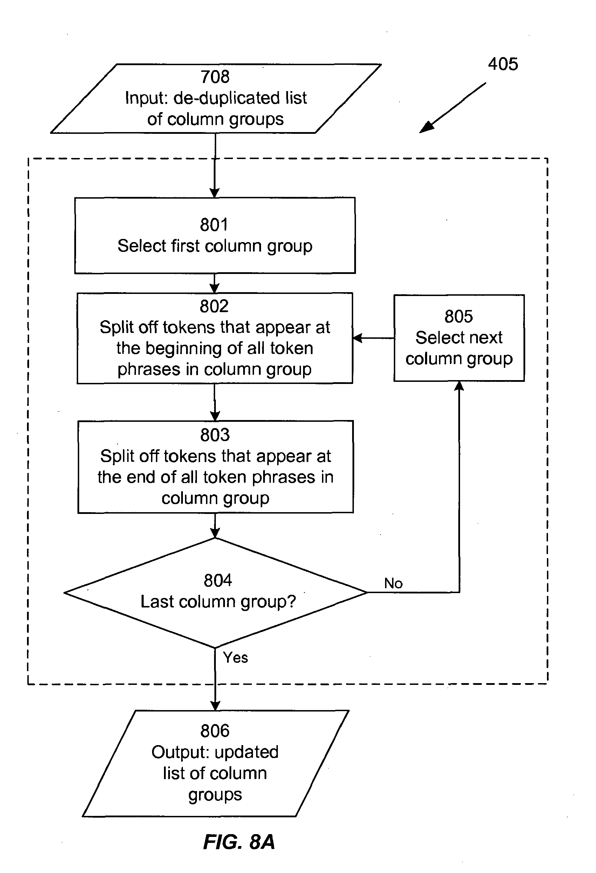

Referring now to Fig. 8A, there is shown a flowchart depicting a method of splitting off shared tokens, according to one embodiment of the present invention. The method shown in Fig. 8A corresponds to step 405 of Fig. 4A.

A first column group 615 is selected 801. Any tokens 412 that appear at the beginning of all token phrases 616 in column group 615 are split off 802 (unless such splitting off would result in empty alternatives). Any tokens 412 that appear at the end of all token phrases 616 in column group 615 are split off 802 (unless such splitting off would result in empty alternatives).

If, in step 804, the last column group 615 has been reached, the method ends, and an updated list 806 of column groups 615 is output. Otherwise, the next column group 615 is selected 805, and the method returns to step 802.

In one embodiment, step 404 is applied to updated list 806 so as to remove duplicates.

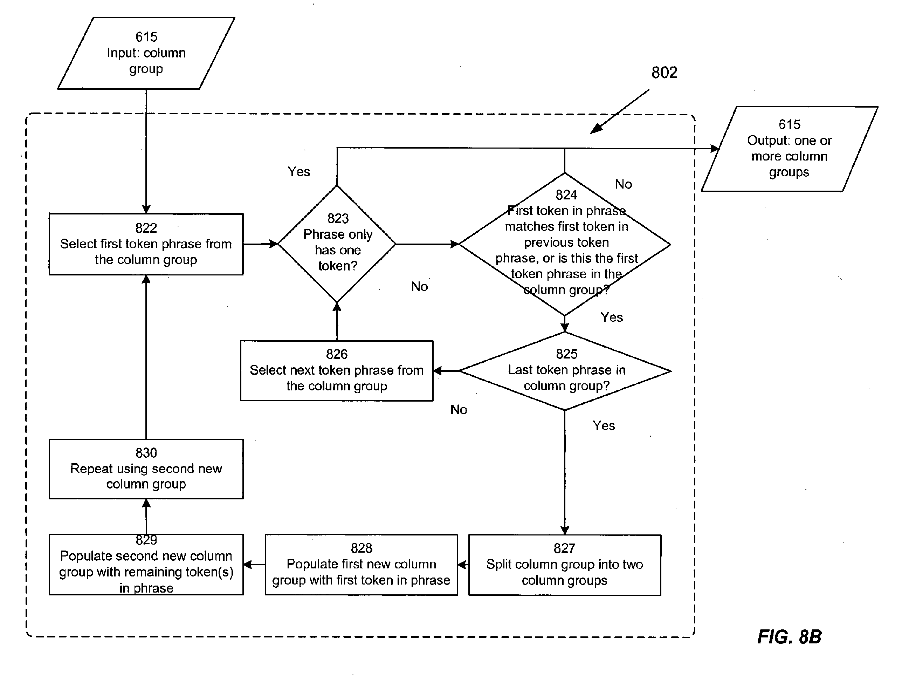

Referring now to Fig. 8B, there is shown a flowchart depicting a method of splitting off tokens 412 that appear at the beginning of all token phrases 616 in a column group 615, according to one embodiment of the present invention. The method shown in Fig. 8B corresponds to step 802 of Fig. 8A.

The input to step 802 is a column group 615. A first token phrase 616 in column group 615 is selected 822. If, in step 823, token phrase 616 contains only one token 412, the method ends, and the output is the single column group 615. This ensures that if any column group 615 contains just one token 412, no splitting off will take place.

If, in step 823, token phrase 616 contains more than one token, a determination is made 824 as to whether the first token 412 in token phrase 616 matches the first token 412 in the previous token phrase 616, or this is the first token phrase 616 in column group 615. If either of these conditions is true, the method proceeds to step 825. Otherwise, the method ends, and the output is the single column group 615.

In step 825, a determination is made as to whether the method has reached the last token phrase 616 in column group 615. If so, column group 615 is split 827 into two new column groups 615. The first new column group 615 is populated 828 with the first token 412 from each token phrase 616. The second new column group 615 is populated 829 with remaining token(s) 412 from each token phrase 616.

In one embodiment, after step 829, the method is repeated 830, using second new column group 615, so that further splitting can be performed iteratively. Alternatively, in another embodiment, after step 829, the set of new column groups 615 is output.

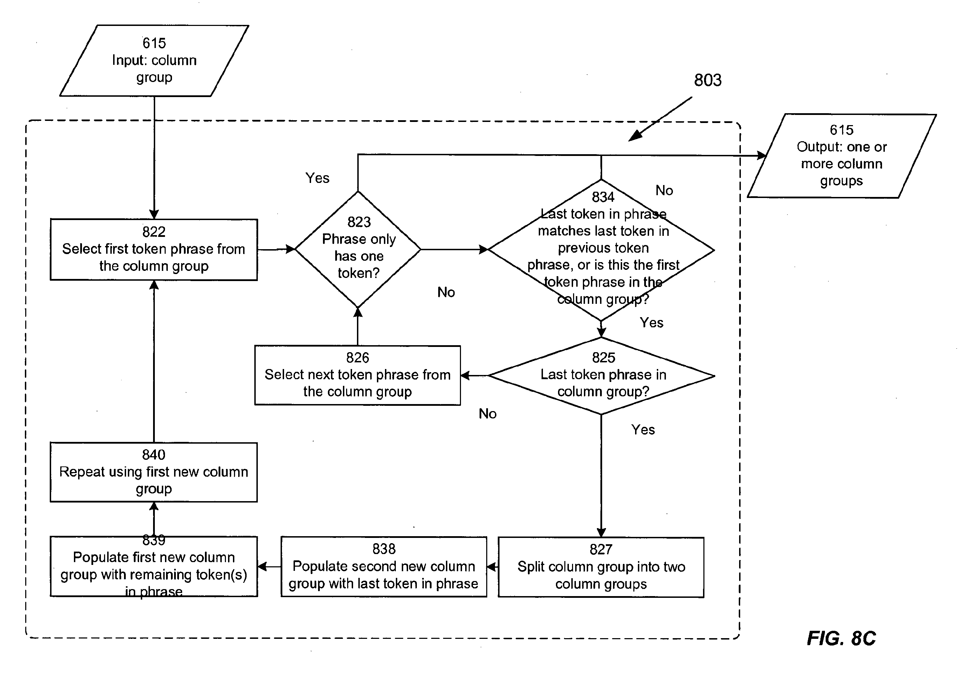

Referring now to Fig. 8C, there is shown a flowchart depicting a method of splitting off tokens 412 that appear at the end of all token phrases 616 in a column group 615, according to one embodiment of the present invention. The method shown in Fig. 8C corresponds to step 803 of Fig. 8A. The method of Fig. 8C is substantially identical to that of Fig. 8B, except that the comparison in step 834 (which replaces step 824) is made between the last token 412 in token phrase 616 and the last token 412 in previous token phrase 616. In addition, steps 828, 829, and 830 are replaced by steps 838, 839, and 840, as described below.

The input to step 803 is a column group 615. A first token phrase 616 in column group 615 is selected 822. If, in step 823, token phrase 616 contains only one token 412, the method ends, and the output is the single column group 615. This ensures that if any column group 615 contains just one token 412, no splitting off will take place.

If, in step 823, token phrase 616 contains more than one token, a determination is made 834 as to whether the last token 412 in token phrase 616 matches the last token 412 in the previous token phrase 616, or this is the first token phrase 616 in column group 615. If either of these conditions is true, the method proceeds to step 825. Otherwise, the method ends, and the output is the single column group 615.

In step 825, a determination is made as to whether the method has reached the last token phrase 616 in column group 615. If so, column group 615 is split 827 into two new column groups 615. The second new column group 615 is populated 838 with the last token 412 from each token phrase 616. The first new column group 615 is populated 839 with remaining token(s) 412 from each token phrase 616.

In one embodiment, after step 839, the method is repeated 840, using second new column group 615, so that further splitting can be performed iteratively. Alternatively, in another embodiment, after step 839, the set of new column groups 615 is output.

### Remove Excess Candidates 406

In some cases, even after consolidation steps described above have been performed, there may still be too many candidates to present effectively to user 101. For example, in some embodiments, a fixed limit on the number of candidates can be established; the limit can be any positive number, such as for example 5. If the number of candidates for a column group exceeds this limit, excess candidates can be removed 406. In other embodiments, this step can be omitted.

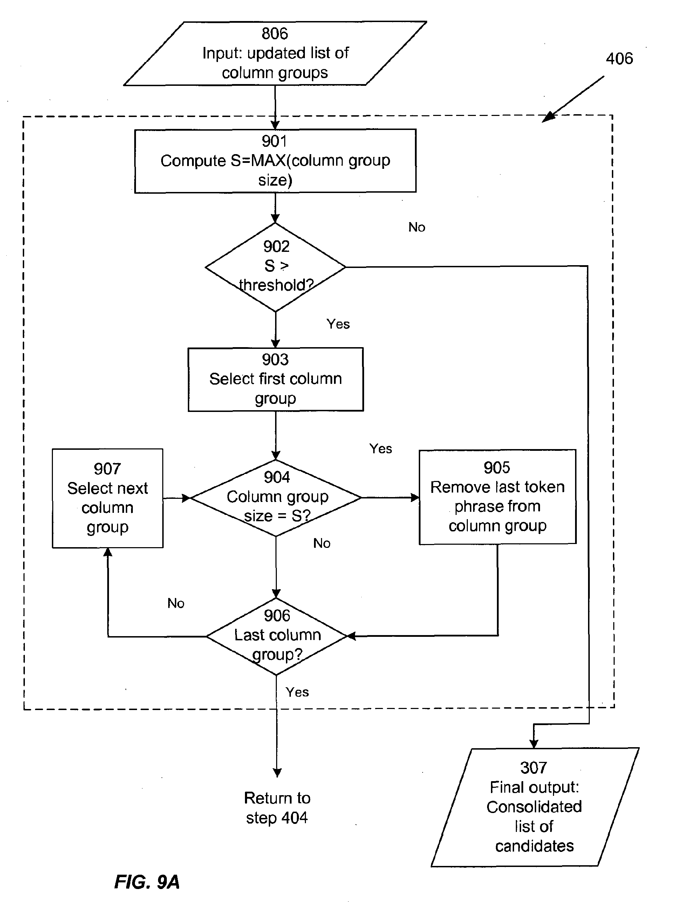

Referring now to Fig. 9A, there is shown a flowchart depicting a method of removing excess candidates, according to one embodiment of the present invention. The method shown in Fig. 9A corresponds to step 406 of Fig. 4A.

Updated list 806 of column groups 615 is received as input. The maximum current column group size S is computed 901; this equals the number of token phrases 616 in the largest column group 615. A determination is made 902 as to whether S exceeds a predetermined threshold, such as 5. The predetermined threshold may be determined based on any applicable factor(s), such as limitations in screen size available, usability constraints, performance, and the like.

If S does not exceed the threshold, the method ends, and consolidated list 307 can be provided as output to text editing UI 109.

If S does exceed the threshold, all column groups 615 of size S are shortened by removing one token phrase 616 (in one embodiment, the last token phrase 616 is removed, although in other embodiments, other token phrases 616 may be removed). This is done by selecting 903 a first column group 615, determining 904 whether the size of column group 615 equals S, and if so, removing 905 the last token phrase 616 from column group 615. In step 906, if the last column group 615 has not been reached, the next column group 615 is selected 907, and step 904 is repeated.

Once the last column group 615 has been reached 906, the method returns to step 404 so that duplicates can be removed and/or shared tokens can be split off 405. Once steps 404 and 405 are repeated, the method may return to step 406 to selectively remove additional candidates if needed.

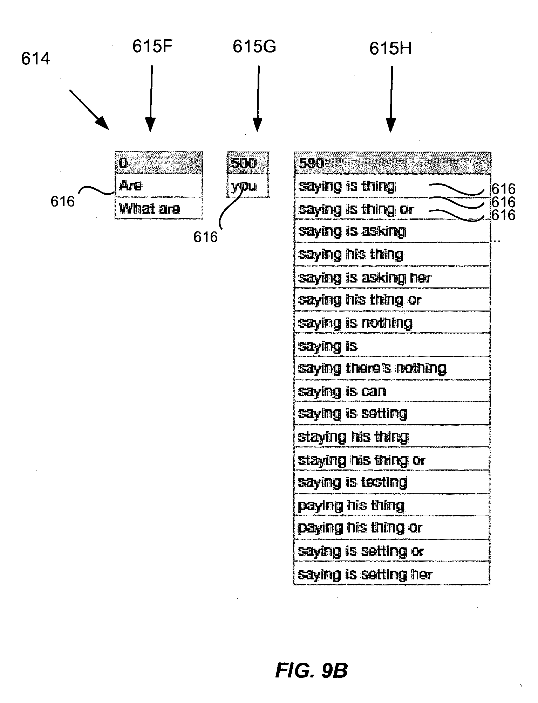

Referring now to Figs. 9B through 9F, there is shown an example of removing excess candidates according to the method depicted in Fig. 9A, according to one embodiment of the present invention.

In Fig. 9B, column group list 614 contains three column groups 615F, 615G, 615H. Column group 615H contains 18 token phrases 616, which exceeds a predetermined threshold of 6.

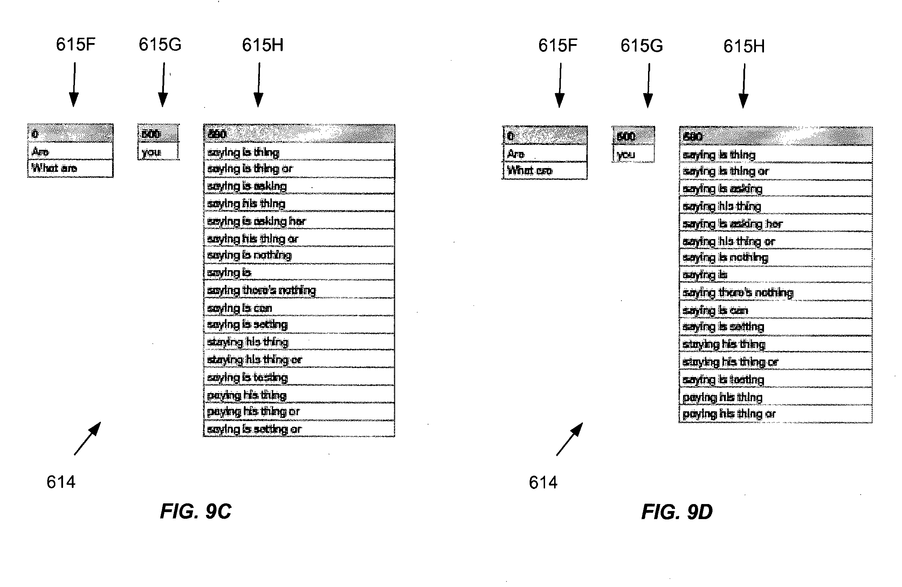

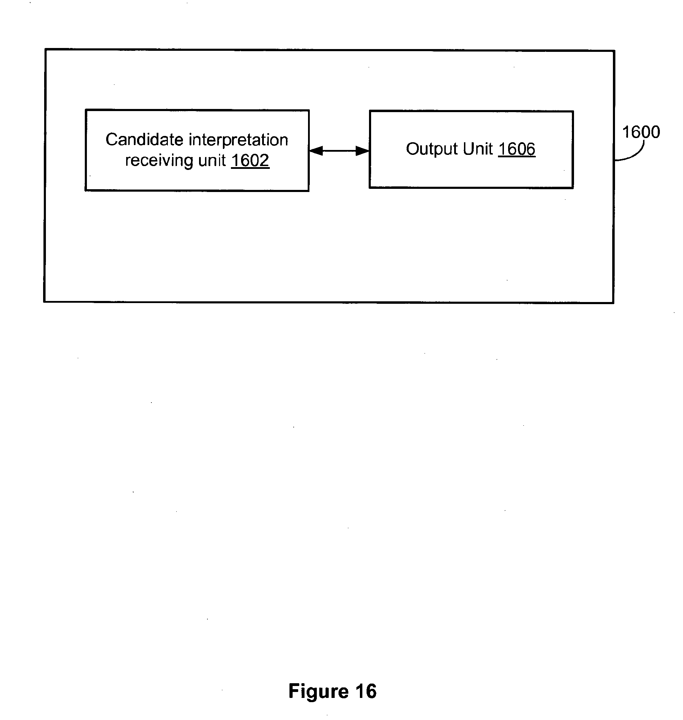

In Fig. 9C, the last token phrase 616 of column group 615H is removed, leaving 17 token phrases 616. This is performed successively, so that in Fig. 9D, 16 token phrases 606 remain. After each removal of a token phrase 616, steps 404 and 405 are repeated to allow removal of duplicates and splitting of shared tokens if possible.

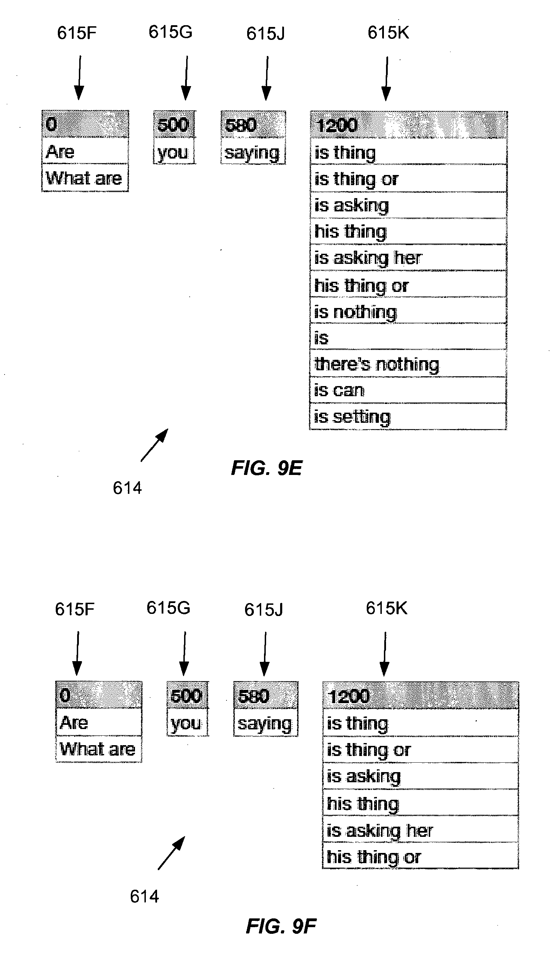

In this example, as shown in Fig. 9E, once 12 token phrases 616 remain, step 405 causes column group 615H to be split into two new column groups 615J, 615K. Further removal of token phrases 616 results in a reasonable number of alternatives for presentation to the user, as shown in Fig. 9F.

In one embodiment, additional steps can be performed to handle punctuation and/or whitespace. Depending on the type, punctuation can be joined to neighboring columns to the left and/or to the right. "End punctuation" (such as periods, question marks, and exclamation points) is joined with a preceding token 412. In one embodiment, no split is performed that would cause end punctuation to appear at the beginning of a column group. Other punctuation, such as spaces, hyphens, apostrophes, quotation marks, and the like, is joined to adjacent tokens 412 based on the rules of the given language.

### User Interface

Once the consolidating steps described above have been performed, consolidated list 307 of candidates can be provided to text editing UI 109 for presentation to user 101 on screen 104 or via some other output device. In one embodiment, text editing UI 109 operates on a client device 102 in a client/server environment, so that consolidated list 307 of candidates is transmitted over an electronic network from server 203 to client 102 in order to make list 307 available to UI 109. Alternatively, in a stand-alone system such as that depicted in Fig. 1, text editing UI 109 can be implemented on a component of device 102. In either case, text editing UI 109 enables user 101 interaction via input device(s) 110 and screen 104.

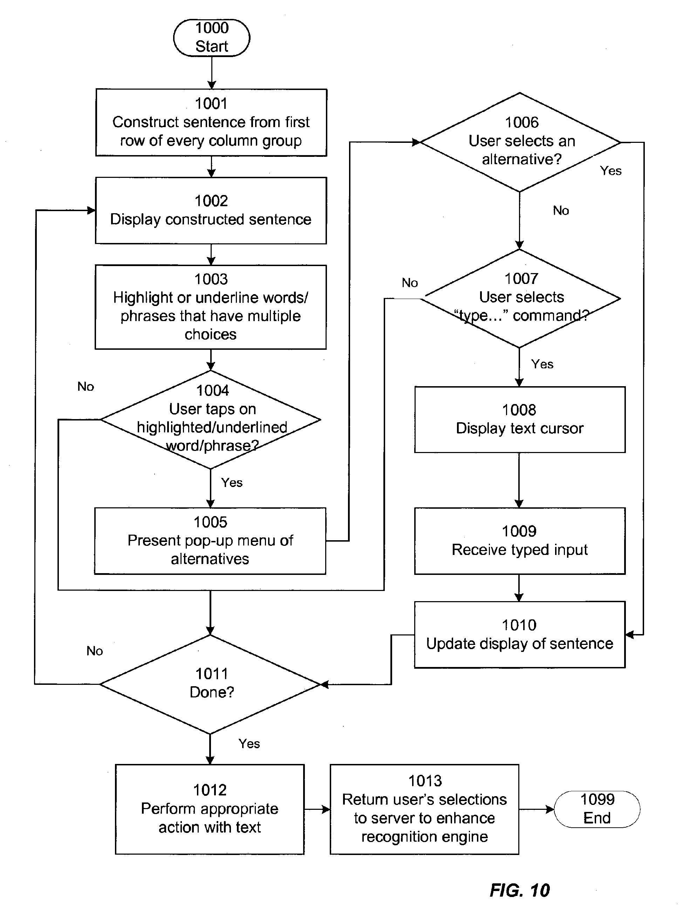

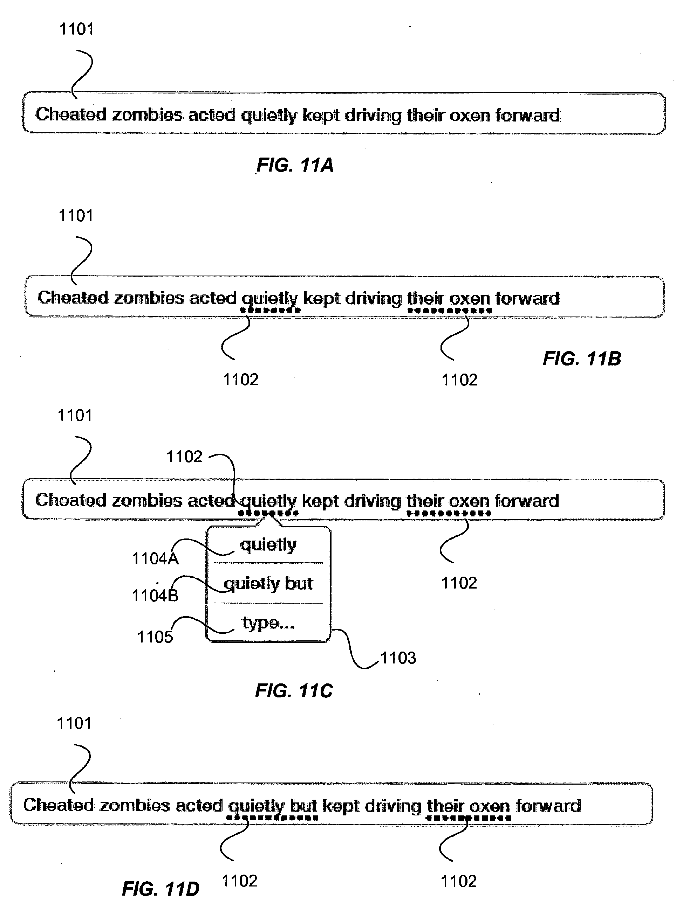

Referring now to Fig. 10, there is shown a flowchart depicting a method of operation for text editing UI 109 for presenting candidates to user 101 and for accepting user selection of candidates, according to one embodiment of the present invention. Referring now also to Figs. 11A through 11D, there is shown an example of operation of text editing UI 109.

In one embodiment, UI 109 presents a default set of candidates, and allows for selection of other candidates via selectively activated pop-up menus.

A sentence 1101 is constructed 1001 using a single entry from each column group 615 in list 307 (each column group 615 can include one or more columns). In one embodiment, the entry occupying the first row of each column group 615 is used, although in other embodiments, other entries can be used. Constructed sentence 1101 is displayed 1002 on screen 104, as shown in Fig. 11A.

In one embodiment, words and/or phrases having multiple choices are highlighted or underlined 1003. Such words and/or phrases correspond to those column groups 615 that contain more than one token phrase 616. Thus, a column group 615 that contains a single token phrase 616 is not highlighted; conversely, a column group 615 that contains at least two different token phrases 616 is highlighted.

Any form of highlighting or underlining can be used, and/or any other technique for visually distinguishing such words and/ or phrases from other words and/or phrases, including but not limited to: font, size, style, background, color, or the like. In another embodiment, no such visual distinction is made. In yet another embodiment, such visually distinguishing elements can be presented only when user 101 causes a cursor to hover over words and/or phrases having multiple choices.

In one embodiment, different forms of highlighting, underlining, or other visual characteristics can be used, depending, for example, on a determined likelihood that the confidence in the displayed alternative. For example, some words and/or phrases can be shown with a more subdued highlighting effect, if alternatives are available but if a determination is made that the displayed default selection is more likely to be correct than any of the alternatives. Such an approach indicates to user 101 that other alternatives are available, while at the same time providing a way to emphasize those words and/or phrases where user's 101 input may be more important because confidence in the displayed alternative is lower. One skilled in the art will recognize that differences in highlighting, underlining, or other visual characteristics can signify any other relevant information, including for example and without limitation the number of alternatives for a given word and/ or phrase.

Fig. 11B depicts an example of a display of sentence 1101 with a highlighted word and a highlighted phrase 1102 to indicate that alternatives are available for those elements of sentence 1101. In one embodiment, the underlining shown in Fig. 11B appears in a distinctive color, such as blue.

For ease of nomenclature, the term "highlighted word" will be used herein to indicate any word or phrase that is displayed with some distinguishing visual characteristic to indicate that alternatives are available. Again, in one embodiment, no such visual distinction is made, in which case the term "highlighted word" refers simply to any word or phrase for which alternatives are available.

In one embodiment, any highlighted word 1102 can be selected by user 101 to activate a pop-up menu 1103 offering alternatives for the word or phrase. For example, in an embodiment where screen 104 is touch-sensitive, user 101 can tap 1004 on a highlighted word 1102, causing pop-up menu 1103 containing alternatives 1104 to be presented 1005. In another embodiment, user 101 can select a highlighted word 1102 using an on-screen cursor controlled by a pointing device, keyboard, joystick, mouse, trackpad, or the like. In one embodiment, pop-up menu 1103 also contains a "type..." entry 1105 that allows the user to manually enter text; this may be used if none of the listed alternatives corresponds to what user 101 intended. Any suitable word and/or icon can be used to denote this entry in pop-up menu 1103; the use of the phrase "type..." is merely exemplary. In one embodiment, once user 101 has made a selection from pop-up menu 1103, the highlighting is removed.

In other embodiments, other mechanisms can be provided for input of alternatives. For example, in one embodiment, pop-up list 1103 may provide a command for receiving further audio input for the specific word in question. Thus, the user can select such a command and then repeat the one word that was incorrectly interpreted. This provides a way for the user to clarify the speech input without having to repeat the entire sentence.

In one embodiment, a command may also be provided to allow the user to manually enter text for (or otherwise clarify) those parts of sentence 1101 that are not highlighted; for example, user may be able to select any word, whether or not it is highlighted, for typed input, spoken clarification, or the like.

Fig. 11C depicts an example of pop-up menu 1103 as may be displayed on screen 104 in response to user 101 having tapped on "quietly" in sentence 1101. In the example, two alternatives are listed: "quietly" 1104A and "quietly but" 11048. Also shown in pop-up list 1103 is "type..." command 1105.

If user 101 selects 1006 one of the listed alternatives 1104, the displayed sentence 1101 is updated 1010.

Fig. 11D depicts an example of displayed sentence 1101 after user has selected "quietly but" alternative 11048 in Fig. 11C. "Quietly" has been replaced by "quietly but" in displayed sentence 1101. The two phrases are still highlighted to indicate that alternatives are available.

User 101 can indicate that he or she is done editing sentence 1101, for example by tapping on a confirmation button or performing some other action. If, in step 1011, user 101 indicates that he or she is done, menu 1103 is dismissed (if it is currently visible), and the method performs 1012 whatever action is appropriate with respect to the entered text. For example, the text may specify some action or command that device 102 is to perform, in which case such device 102 may proceed with the action or command. Alternatively, the text may be a message, document or other item to be transmitted, output, or saved; if so, the appropriate action is performed. In addition, in one embodiment, user's 101 selections may be returned 1013 to server 203 and/or speech server 205 to improve future recognition of user's 101 speech. As user 101 makes such selections, additional learning may take place, thus improving the performance of the speech recognition processor 108 and/or speech recognizer 206.

If, user 1001 does not select 1006 an alternative, but instead selects 1007 "type..." command, a text cursor (not shown) is displayed 1008, and user 101 is given an opportunity to provide typed input. Such typed input can be received 1009 via a physical or virtual (touch-screen) keyboard, or by any other suitable means. Upon completely of typed input, the method proceeds to step 1010 wherein the display of sentence 1101 is updated.

If, in step 1004 or 1007, the user does not indicate that further input is needed, the method proceeds to step 1011, where a determination is made as to whether the user is done editing the text. Once the user is done, the method proceeds to step 1012 to perform appropriate action in connection with the text input, and to step 1013 to return user's selections 101 for further improvement of speech recognition operations.

### Variations

In one embodiment, as described above, candidate interpretations are already tokenized when received, and timing information is available for each token. In an alternative embodiment, the techniques of the present invention can be performed on a set of plain text sentences that are provided as candidate interpretations without necessarily including timing information. The plain text sentences can be tokenized and placed in a grid, as an alternative to step 402 described above.

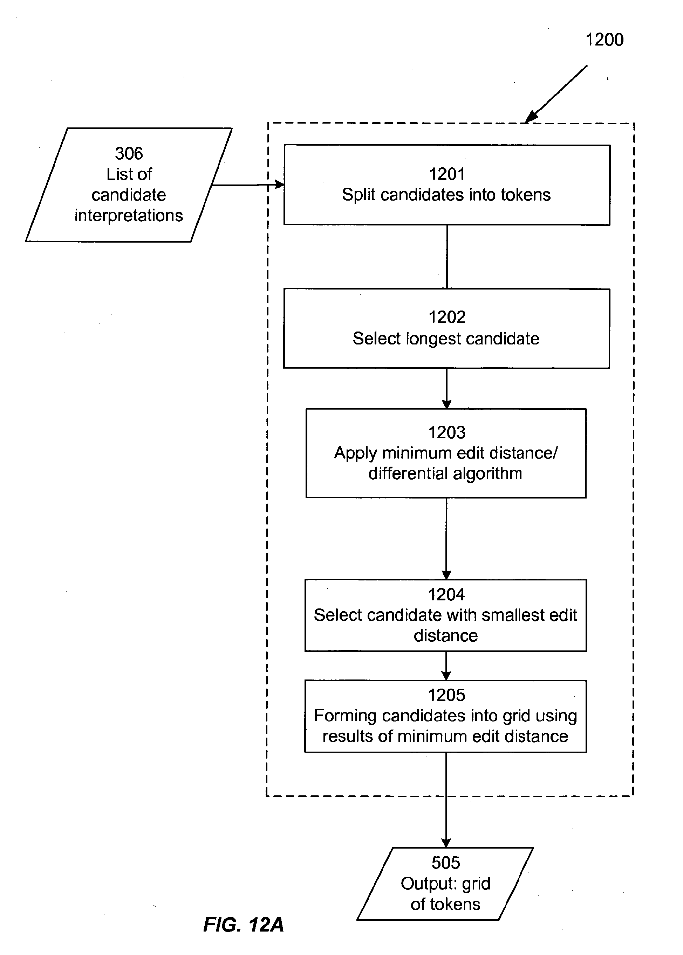

Referring now to Fig. 12A, there is shown a flowchart depicting an alternative method of forming grid 505 of tokens 412 from list 306 of candidate interpretations 411, according to one embodiment of the present invention. The method includes a set 1200 of steps that can replace step 402 described above.

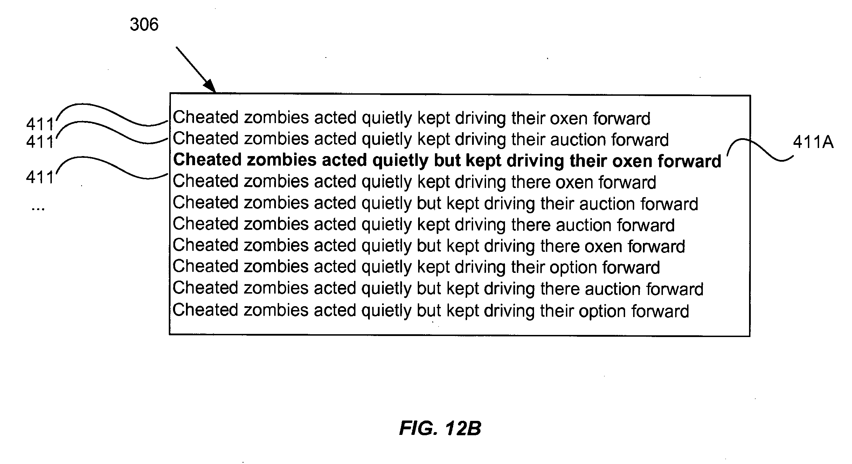

Referring now also to Figs. 12B through 12D, there is shown an example of generating grid 505 of tokens 412 by the alternative method depicted in Fig. 12A, according to one embodiment of the present invention.

Candidate interpretations 411 are split 1201 into tokens 412. A standard language-specific string tokenizer can be used, as is well known in the art. For example, for candidate interpretations 411 that are English sentences or sentence fragments, candidates 411 can be split up based on whitespace characters.

In one embodiment, longest candidate 411 is selected 1202; one skilled in the art will recognize that any other candidate can be selected 411. Fig. 12B shows an example list 306 in which longest candidate 411A is indicated in boldface. In this example, "longest" means the candidate 411 with the most words.

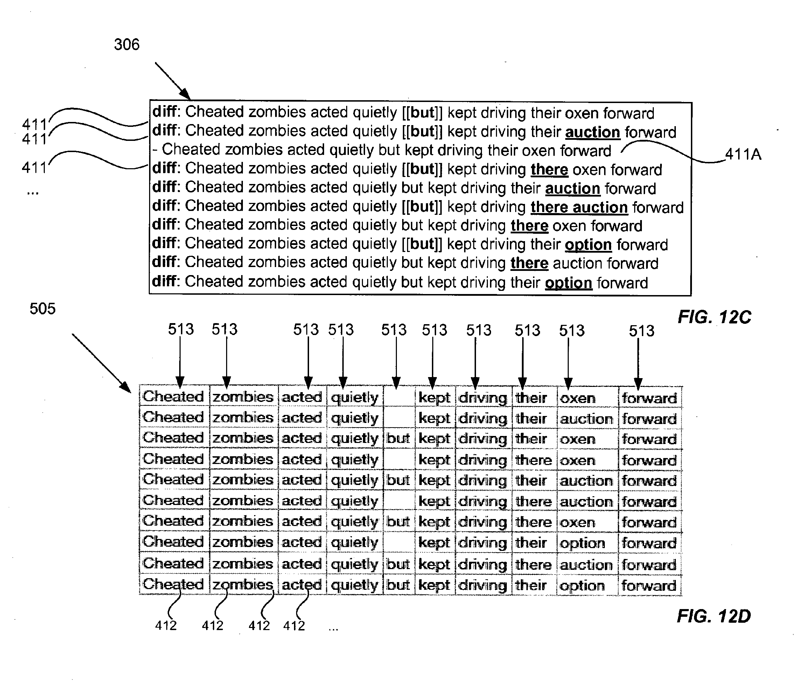

A minimum edit distance / diff algorithm is applied 1203 to determine the fewest additions/removals for each candidate 411 with respect to selected candidate 411A. In one embodiment, this algorithm is applied at a token level, as opposed to character level, to reduce processing and/or memory consumption. Fig. 12C shows example list 306 in which the minimum edit distance / diff algorithm has been applied. For each candidate 411 other than selected candidate 411A, changes with respect to selected candidate 411A are indicated by underlining, while deletions are indicated by square brackets.

Candidate 411 with the smallest edit distance from all other candidates 411 is then selected 1204. Candidates 411 are then formed 1205 into grid 505 using results of the minimum edit distance / diff algorithm. Fig. 12D shows an example of grid 505, having multiple columns 513 based on the algorithm. Application of the algorithm ensures that blank areas will be left in grid 505 where appropriate (for example, in the column 513 containing the word "but"), so that tokens 412 that correspond to one another will appear in the same column of grid 505.

Grid 505 can then be used as input to step 403 as described above. Timing codes can be artificially introduced by assigning arbitrary times to each column (e.g., times 0, 1, 2, 3, etc.), as depicted by example in Figs, 14A through 14E.

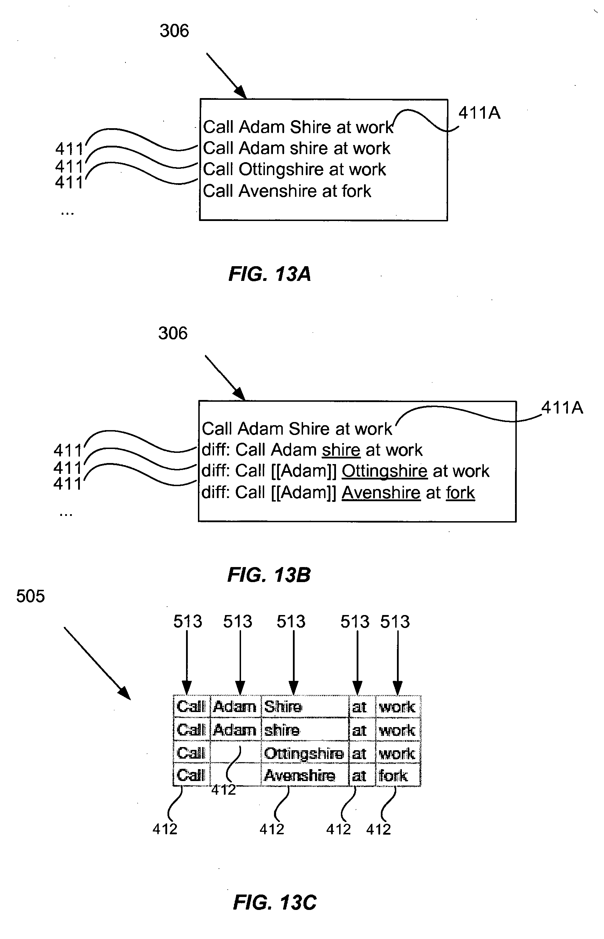

In some cases, such an approach may introduce uncertainties. Referring now also to Figs. 13A through 13C, there is shown another example of generating grid 505 of tokens 412 by the alternative method depicted in Fig. 12A, wherein an uncertainty is introduced. In this example, as shown in Fig. 13A, longest candidate 411A is "Call Adam Shire at work". Fig. 13B shows example list 306 in which the minimum edit distance / diff algorithm has been applied. Since the system does not have sufficient info to merge empty cells, it does not know whether "Adam" overlaps with "Call" or "Ottingshire", resulting in the grid 505 shown in Fig. 13C. More specifically, the new token "Adam" introduces uncertainty because it is not known whether the token should be associated with the column 513 to the immediate left or the column 513 to the immediate right. In one embodiment, such a situation can be resolved using length heuristics, or by noting that the first column 513 is all the same, or by any other suitable mechanism.

In another embodiment, the situation exemplified in Fig. 13C can be resolved by extending bordering tokens 412 so that, for rows having empty cells, the empty cell is deleted and the two neighboring columns 513 extended so they touch each other. For rows having a token 412 in the location corresponding to the empty cell, the token overlaps at least part of the time span occupied by the columns 513 that were extended. Splitting 403, de-duplication 404, and splitting off 405 of shared tokens 412 are then performed as described above, to achieve a final result.

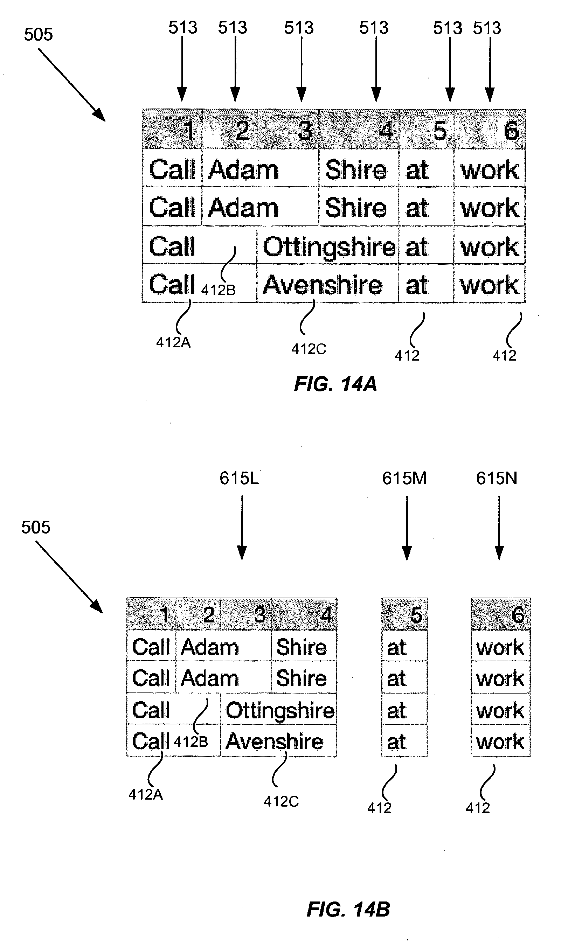

Referring now to Figs 14A through 14E, there is shown an example of extending bordering tokens 412 in the manner described. Token 412B is an "added" word, as computed by the minimum edit distance determination. In Fig. 14A, grid 505 has been modified to remove empty cells in rows 3 and 4, since token 412B is absent from those two rows. Tokens 412A and 412C are extended so that they touch each other, to make up for the absence of token 412B. In rows 1 and 2, token 412B spans across two columns, so that it overlaps the time period occupied by tokens 412A and 412C in rows 3 and 4.

In Fig. 14B, splitting step 403 has been performed, yielding three column groups 615L, 615M, and 615N. Column group 615L contains four columns 513, column groups 615M and 615N each contain one column 513.

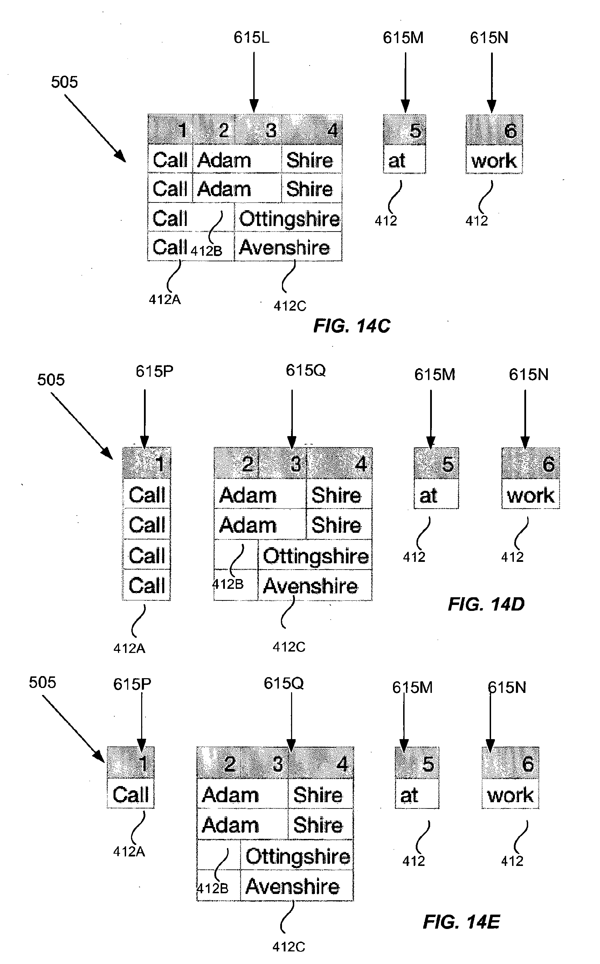

In Fig. 14C, removal of duplicates 404 has been performed, so that the column groups 615M and 615N each contain one entry. Column group 615L is unchanged.

In Fig. 14D, splitting off of shared tokens 405 has been performed. This causes column group 615L to be split into two columns 615P and 615Q.

In Fig. 14E, removal of duplicates 404 has again been performed, so that column group 615P now contains one entry. The results can then be provided as consolidated list 307.

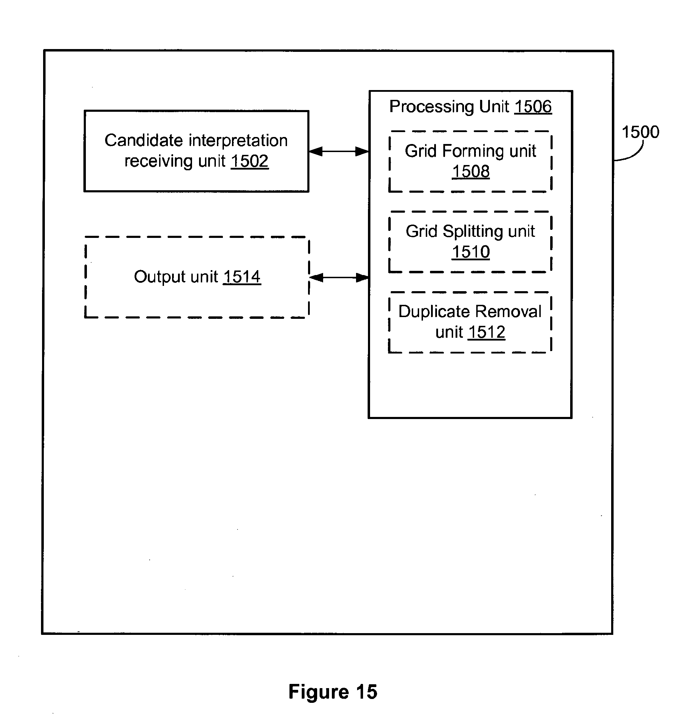

In accordance with some implementations, Fig. 15 shows a functional block diagram of an electronic device 1500 configured in accordance with the principles of the invention as described above. The functional blocks of the device may be implemented by hardware, software, or a combination of hardware and software to carry out the principles of the invention. It is understood by persons of skill in the art that the functional blocks described in Figure 15 may be combined or separated into sub-blocks to implement the principles of the invention as defined by the appended claims. Therefore, the description herein may support any possible combination or separation or further definition of the functional blocks described herein.

As shown in Fig. 15, the electronic device 1500 includes a candidate interpretation receiving unit 1502 configured to receive a list of candidate interpretations of spoken input. The electronic device 1500 also includes a processing unit 1506 coupled to the candidate interpretation receiving unit 1502. In some implementations, the processing unit 1506 includes a grid forming unit 1508, a grid splitting unit 1510, and a duplicate removal unit 1512. In some implementations, the electronic device also includes an output unit 1514 coupled to the processing unit 1506.

The processing unit 1506 is configured to: form a grid of tokens from the received list, the grid being organized into a plurality of rows and a plurality of columns (e.g., with the grid forming unit 1508); split the grid into a set of column groups based on timing information, each column group comprising a plurality of token groups, and each token group comprising at least one token (e.g., with the grid splitting unit 1510); and, responsive to detecting duplicated token groups in the grid, remove the duplicated token groups to generate a consolidated grid (e.g., with the duplicate removal unit 1512). In some implementations, the output unit 1514 is configured to cause an output device to output the candidate interpretations based on the consolidated grid. In some implementations, the output unit 1514 is configured to output the candidate interpretations based on the consolidated grid.

In some implementations, each candidate interpretation in the received list comprises a plurality of tokens, and the processing unit 1506 is configured to (e.g., with the grid forming unit 1508): for each token in each candidate interpretation, determine a start time and an end time; form a set of unique integers from the determined start and end times; form a grid comprising a number of rows corresponding to the number of candidate interpretations in the received list, where each row comprising a number of cells correspond to the number of unique integers in the set of unique integers, and the cells are organized into columns; and insert each token into all cells spanned by the start and end times of the token.

In some implementations, each candidate interpretation in the received list comprises a plurality of tokens associated with start and end times, and each column of the grid is associated with a start and end time, and the processing unit 1506 is configured to (e.g., with the grid splitting unit 1510): for each column in the grid: responsive to the column not already belonging to a column group, form a column group including the current column; for each token in the column, determine whether any tokens in the column are associated with an end time that spans beyond the end time of the column; and responsive to any token in the column spanning beyond the end time of the column, add the next column to the column group that includes the current column.

In some implementations, the processing unit 1506 is configured to (e.g., with the duplicate removal unit 1512): define a plurality of token phrases, each token phrase comprising at least one token appearing within a row of a column group; and, for each column group in the grid: determine whether any token phrases are duplicated within the column group; and responsive to any token phrases being duplicated, delete the duplicates.

In some implementations, the processing unit 1506 is configured to: responsive to any edge tokens being shared among token phrases within a column group having at least two tokens in all its token phrases, split the column group into a first column group comprising the shared edge tokens and a second column group comprising the at least one remaining token in the token phrases (e.g., with the grid splitting unit 1510).

In some implementations, the processing unit 1506 is configured to: for each column group having at least two tokens in all its token phrases: responsive to any tokens appearing at the beginning of all token phrases in the column group, split the column group into a first column group comprising the first token and a second column group comprising the at least one remaining token in the token phrases; and responsive to any tokens appearing at the end of all token phrases in the column group, split the column group into a first column group comprising the last token and a second column group comprising the at least one remaining token in the token phrases (e.g., with the grid splitting unit 1510).

In some implementations, the processing unit 1506 is configured to: responsive to any column group having a number of token phrases exceeding a predetermined threshold: remove at least one token phrase; and repeat the steps of splitting the grid and removing duplicates (e.g., with the grid splitting unit 1510 and/or the duplicate removal unit 1512).

In some implementations, the processing unit 1506 is configured to, for each column group having at least two tokens in all its token phrases: responsive to any tokens appearing at the beginning of all token phrases in the column group, split the column group into a first column group comprising the first token and a second column group comprising the at least one remaining token in the token phrases (e.g., with the grid splitting unit 1510); and responsive to any tokens appearing at the end of all token phrases in the column group, split the column group into a first column group comprising the last token and a second column group comprising the at least one remaining token in the token phrases (e.g., with the grid splitting unit 1510).

In some implementations, the processing unit 1506 is configured to, responsive to any column group having a number of token phrases exceeding a predetermined threshold: remove at least one token phrase; and repeat the steps of splitting the grid and removing duplicates (e.g., with the grid splitting unit 1510 and/or the duplicate removal unit 1512).

In some implementations, the candidate interpretation receiving unit 1502 is configured to: receive a plurality of tokenized candidate interpretations, each candidate interpretation comprising a plurality of tokens; and receive timing information for each token.

In some implementations, the processing unit 1506 is configured to (e.g., with the grid forming unit 1508): split the candidate interpretations in the received list into tokens; select one of the candidate interpretations; applying a differential algorithm to determine differences of each other candidate interpretation with respect to the selected candidate interpretation; and form a grid of tokens based on results of the differential algorithm.

In some implementations, the output unit 1514 is configured to: for each column group: responsive to the column group comprising a single token group, display the single token group on an output device; and responsive to the column group comprising a plurality of token groups, display the plurality of the token groups.

In some implementations, the output unit 1514 is configured to: for each column group: responsive to the column group comprising a single token group, display the single token group on an output device; and responsive to the column group comprising a plurality of token groups, display, on the output device, a first one of the token groups, and displaying at least a subset of the remaining token groups in the column group as alternatives to the first token group.

In some implementations, the output unit 1514 is configured to: for at least one column group comprising a plurality of token groups, display, on a display device, a menu comprising least one alternative token group from the column group.

In some implementations, the output unit 1514 is configured to: for each column group: responsive to the column group comprising a single token group, display the single token group on an output device; and responsive to the column group comprising a plurality of token groups, display, on the output device, a first one of the token groups in a visually distinctive manner as compared with the display of a column group comprising a single token group. In some implementations, the output unit 1514 is configured to display the first one of the token groups in a manner that indicates a degree of confidence in the displayed token group. In some implementations, the output unit 1514 is configured to display the first one of the token groups in a manner that indicates relative likelihood that the displayed token group is a correct interpretation of the spoken input.

In some implementations, the output unit 1514 is configured to: for each column group: responsive to the column group comprising a single token group, display the single token group on an output device; and responsive to the column group comprising a plurality of token groups, display and highlight a one of the token groups on the output device.

In some implementations, the electronic device further comprises an input receiving unit configured to receive user input associated with a highlighted token group, and the output unit 1514 is configured to, responsive to the user input associated with a highlighted token group, display, on a display device, a menu comprising least one alternative token group from the same column group. In some implementations, the input receiving unit is further configured to receive user input selecting an alternative token group from the menu, and the output unit 1514 is further configured to, responsive to the user input selecting an alternative token group from the menu, replace the highlighted token group with the alternative token group. In some implementations, the processing unit 1506 is further configured to, responsive to the user input selecting an alternative token group from the menu, provide the selected alternative token group to a speech recognition engine for training of the speech recognition engine.

In accordance with some implementations, Fig. 15 shows a functional block diagram of an electronic device 1500 configured in accordance with the principles of the invention as described above. The functional blocks of the device may be implemented by hardware, software, or a combination of hardware and software to carry out the principles of the invention. It is understood by persons of skill in the art that the functional blocks described in Figure 15 may be combined or separated into sub-blocks to implement the principles of the invention as defined by the appended claims. Therefore, the description herein may support any possible combination or separation or further definition of the functional blocks described herein.

As shown in Fig. 16, the electronic device 1600 includes a candidate interpretation receiving unit 1602 configured to receive a list of candidate interpretations of spoken input. The consolidated list comprises at least one column group having a single token group and at least one column group having a plurality of token groups. The electronic device 1600 also includes an output unit 1606 coupled to the candidate interpretation receiving unit 1602. The output unit 1606 is configured to: for each column group having a single token group, display the single token group on an output device; and for each column group having a plurality of token groups, display, on the output device, a first one of the token groups in a visually distinctive manner as compared with the display of a column group comprising a single token group.

In some implementations, the output unit 1606 is configured to: display, on an output device, a menu comprising least one alternative token group from the column group. In some implementations, displaying a first one of the token groups in a visually distinctive manner comprises highlighting the displayed token group.

In some implementations, the electronic device 1600 includes an input receiving unit configured to receive user input associated with a highlighted token group, and the output unit 1606 is configured to: responsive to the user input associated with a highlighted token group, display, on an output device, a menu comprising least one alternative token group from the same column group. In some implementations, the user input unit is configured to receive user input selecting an alternative token group from the menu, and the output unit 1606 is configured to: responsive to the user input selecting an alternative token group from the menu, replace the highlighted token group with the alternative token group.

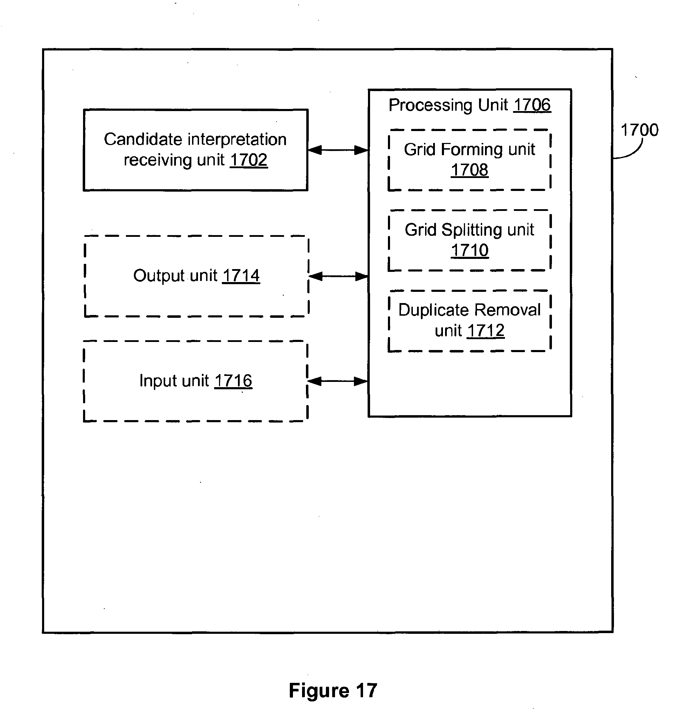

As shown in Fig. 17, the electronic device 1700 includes a candidate interpretation receiving unit 1702 configured to obtain a list of candidate interpretations of spoken input. The electronic device 1700 also includes a processing unit 1706 coupled to the candidate interpretation receiving unit 1702. In some implementations, the processing unit 1706 includes a grid forming unit 1708, a grid splitting unit 1710, and a duplicate removal unit 1712. In some implementations, the electronic device also includes an output unit 1714 coupled to the processing unit 1706.

The processing unit 1706 is configured to: form a grid of tokens from the received list, the grid being organized into a plurality of rows and a plurality of columns (e.g., with the grid forming unit 1708); split the grid into a set of column groups based on timing information, each column group comprising a plurality of token groups, each token group comprising at least one token (e.g., with the grid splitting unit 1710); and, responsive to detecting duplicated token groups in the grid, remove the duplicated token groups to form a consolidated list of candidates (e.g., with the duplicate removal unit. The output unit 1714 is configured to transmit a representation of the consolidated list of candidates from the server to a client.

The electronic device 1700 also includes an output unit 1706 coupled to the candidate interpretation receiving unit 1702. The output unit 1706 is configured to: for each column group having a single token group, display the single token group on an output device; and for each column group having a plurality of token groups, display, on the output device, a first one of the token groups in a visually distinctive manner as compared with the display of a column group comprising a single token group.

In some implementations, the electronic device 1700 includes an input unit 1716 configured to receive a representation of an audio stream. The candidate interpretation receiving unit 1702 is configured to perform speech recognition analysis on the representation of an audio stream to generate a list of candidate interpretations of spoken input.

In some implementations, the electronic device 1700 is configured to receive a representation of an audio stream from the server (e.g., with the input unit 1716); relay the representation of the audio stream to a speech recognition server (e.g., with the output unit 1714); and receive a list of candidate interpretations of spoken input generated by the speech recognition server (e.g., with the input unit 1716).

The present invention has been described in particular detail with respect to possible embodiments. Those of skill in the art will appreciate that the invention as defined by the appended claims may be practiced in other embodiments. First, the particular naming of the components, capitalization of terms, the attributes, data structures, or any other programming or structural aspect is not mandatory or significant, and the mechanisms that implement the invention and/or its features may have different names, formats, or protocols. Further, the system may be implemented via a combination of hardware and software, as described, or entirely in hardware elements, or entirely in software elements. Also, the particular division of functionality between the various system components described herein is merely exemplary, and not mandatory; functions performed by a single system component may instead be performed by multiple components, and functions performed by multiple components may instead be performed by a single component.

In various embodiments, the present invention can be implemented as a system or a method for performing the above-described techniques, either singly or in any combination. In another embodiment, the present invention can be implemented as a computer program product comprising a nontransitory computer-readable storage medium and computer program code, encoded on the medium, for causing a processor in a computing device or other electronic device to perform the above-described techniques.

Reference in the specification to "one embodiment" or to "an embodiment" means that a particular feature, structure, or characteristic described in connection with the embodiments is included in at least one embodiment of the invention. The appearances of the phrase "in one embodiment" in various places in the specification are not necessarily all referring to the same embodiment.

Some portions of the above are presented in terms of algorithms and symbolic representations of operations on data bits within a memory of a computing device. These algorithmic descriptions and representations are the means used by those skilled in the data processing arts to most effectively convey the substance of their work to others skilled in the art. An algorithm is here, and generally, conceived to be a self-consistent sequence of steps (instructions) leading to a desired result. The steps are those requiring physical manipulations of physical quantities. Usually, though not necessarily, these quantities take the form of electrical, magnetic or optical signals capable of being stored, transferred, combined, compared and otherwise manipulated. It is convenient at times, principally for reasons of common usage, to refer to these signals as bits, values, elements, symbols, characters, terms, numbers, or the like. Furthermore, it is also convenient at times, to refer to certain arrangements of steps requiring physical manipulations of physical quantities as modules or code devices, without loss of generality.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "displaying" or "determining" or the like, refer to the action and processes of a computer system, or similar electronic computing module and/or device, that manipulates and transforms data represented as physical (electronic) quantities within the computer system memories or registers or other such information storage, transmission or display devices.

Certain aspects of the present invention include process steps and instructions described herein in the form of an algorithm. It should be noted that the process steps and instructions of the present invention can be embodied in software, firmware and/or hardware, and when embodied in software, can be downloaded to reside on and be operated from different platforms used by a variety of operating systems.

The present invention also relates to an apparatus for performing the operations herein. This apparatus may be specially constructed for the required purposes, or it may comprise a general-purpose computing device selectively activated or reconfigured by a computer program stored in the computing device. Such a computer program may be stored in a nontransitory computer readable storage medium, such as, but is not limited to, any type of disk including floppy disks, optical disks, CD-ROMs, magnetic-optical disks, read-only memories (ROMs), random access memories (RAMs), EPROMs, EEPROMs, flash memory, solid state drives, magnetic or optical cards, application specific integrated circuits (ASICs), or any type of media suitable for storing electronic instructions, and each coupled to a computer system bus. Further, the computing devices referred to herein may include a single processor or may be architectures employing multiple processor designs for increased computing capability.

The algorithms and displays presented herein are not inherently related to any particular computing device, virtualized system, or other apparatus. Various general-purpose systems may also be used with programs in accordance with the teachings herein, or it may prove convenient to construct more specialized apparatus to perform the required method steps. The required structure for a variety of these systems will be apparent from the description provided herein. In addition, the present invention is not described with reference to any particular programming language. It will be appreciated that a variety of programming languages may be used to implement the teachings of the present invention as defined by the appended claims, and any references above to specific languages are provided for disclosure of enablement and best mode of the present invention.

Accordingly, in various embodiments, the present invention can be implemented as software, hardware, and/or other elements for controlling a computer system, computing device, or other electronic device, or any combination or plurality thereof. Such an electronic device can include, for example, a processor, an input device (such as a keyboard, mouse, touchpad, trackpad, joystick, trackball, microphone, and/or any combination thereof), an output device (such as a screen, speaker, and/ or the like), memory, long-term storage (such as magnetic storage, optical storage, and/or the like), and/or network connectivity, according to techniques that are well known in the art. Such an electronic device may be portable or nonportable. Examples of electronic devices that may be used for implementing the invention include: a mobile phone, personal digital assistant, smartphone, kiosk, server computer, enterprise computing device, desktop computer, laptop computer, tablet computer, consumer electronic device, television, set-top box, or the like. An electronic device for implementing the present invention may use any operating system such as, for example: iOS, available from Apple Inc. of Cupertino, California; Mac OS X, available from Apple Inc. of Cupertino, California; Android, available from Google, Inc. of Mountain View, California; Linux; Microsoft Windows, available from Microsoft Corporation of Redmond, Washington; and/or any other operating system that is adapted for use on the device.

In various embodiments, the present invention can be implemented in a distributed processing environment, networked computing environment, or web-based computing environment. Elements of the invention can be implemented on client computing devices, servers, routers, and/or other network or non-network components. In some embodiments, the present invention is implemented using a client/server architecture, wherein some components are implemented on one or more client computing devices and other components are implemented on one or more servers. In one embodiment, in the course of implementing the techniques of the present invention, client(s) request content from server(s), and server(s) return content in response to the requests. A browser may be installed at the client computing device for enabling such requests and responses, and for providing a user interface by which the user can initiate and control such interactions and view the presented content.

Any or all of the network components for implementing the present invention may, in some embodiments, be communicatively coupled with one another using any suitable electronic network, whether wired or wireless or any combination thereof, and using any suitable protocols for enabling such communication. One example of such a network is the Internet, although the invention can be implemented using other networks as well.

While the invention has been described with respect to a limited number of embodiments, those skilled in the art, having benefit of the above description, will appreciate that other embodiments may be devised which do not depart from the scope of the present invention as defined by the appended claims. In addition, it should be noted that the language used in the specification has been principally selected for readability and instructional purposes, and may not have been selected to delineate or circumscribe the inventive subject matter. Accordingly, the disclosure of the present invention is intended to be illustrative, but not limiting, of the scope of the invention, which is set forth in the claims.

## Claims

1. A computer-implemented method for generating a consolidated list of speech recognition results, comprising:
at a processor, receiving a list of candidate interpretations of spoken input;
at the processor, forming a grid of tokens from the received list, the grid being organized into a plurality of rows and a plurality of columns;
at the processor, splitting the grid into a set of column groups based on timing information, each column group comprising a plurality of token groups, each token group comprising at least one token;
at the processor, responsive to detecting duplicated token groups in the grid, removing the duplicated token groups to generate a consolidated grid; and
causing an output device to output the candidate interpretations based on the consolidated grid.

2. The computer-implemented method of claim 1, wherein each candidate interpretation in the received list comprises a plurality of tokens, and wherein forming a grid of tokens from the received list comprises:
at the processor, for each token in each candidate interpretation, determining a start time and an end time;
at the processor, forming a set of unique integers from the determined start and end times;
at the processor, forming a grid comprising a number of rows corresponding to the number of candidate interpretations in the received list, each row comprising a number of cells corresponding to the number of unique integers in the set of unique integers, the cells being organized into columns; and
at the processor, inserting each token into all cells spanned by the start and end times of the token.

3. The computer-implemented method of any of claims 1-2, wherein each candidate interpretation in the received list comprises a plurality of tokens associated with start and end times, and wherein each column of the grid is associated with a start and end time, and wherein splitting the grid into a set of column groups based on timing information comprises:
at the processor, for each column in the grid:
responsive to the column not already belonging to a column group, forming a column group including the current column;
for each token in the column, determining whether any tokens in the column are associated with an end time that spans beyond the end time of the column; and
responsive to any token in the column spanning beyond the end time of the column, adding the next column to the column group that includes the current column.

4. The computer-implemented method of claim any of claims 1-3, wherein removing the duplicated token groups to form the consolidated grid of candidate interpretations comprises:
at the processor, defining a plurality of token phrases, each token phrase comprising at least one token appearing within a row of a column group; and
for each column group in the grid:
determining whether any token phrases are duplicated within the column group; and
responsive to any token phrases being duplicated, deleting the duplicates.

5. The computer-implemented method of any of claims 1-4, further comprising:
at the processor, responsive to any edge tokens being shared among token phrases within a column group having at least two tokens in all its token phrases, splitting the column group into a first column group comprising the shared edge tokens and a second column group comprising the at least one remaining token in the token phrases.

6. The computer-implemented method of any of claims 1-5, further comprising:
at the processor, for each column group having at least two tokens in all its token phrases:
responsive to any tokens appearing at the beginning of all token phrases in the column group, splitting the column group into a first column group comprising the first token and a second column group comprising the at least one remaining token in the token phrases; and
responsive to any tokens appearing at the end of all token phrases in the column group, splitting the column group into a first column group comprising the last token and a second column group comprising the at least one remaining token in the token phrases.

7. The computer-implemented method of any of claims 1-6, further comprising:
at the processor, responsive to any column group having a number of token phrases exceeding a predetermined threshold:
removing at least one token phrase; and
repeating the steps of splitting the grid and removing duplicates.

8. The computer-implemented method of any of claims 1-7, wherein receiving the list of candidate interpretations of spoken input comprises:
at the processor, receiving a plurality of tokenized candidate interpretations, each candidate interpretation comprising a plurality of tokens; and
at the processor, receiving timing information for each token.

9. The computer-implemented method of any of claims 1-8, wherein the consolidated grid of candidate interpretations comprises:
at least one column group having a single token group; and
at least one column group having a plurality of token groups.

10. The computer-implemented method of claim 9, wherein causing the output device to output the candidate interpretations comprises:
for each column group:
responsive to the column group comprising a single token group, causing the output device to display the single token group on the output device; and
responsive to the column group comprising a plurality of token groups, causing the output device to display the plurality of the token groups on the output device.

11. The computer-implemented method of claim 9, wherein causing the output device to output the candidate interpretations comprises:
for each column group:
responsive to the column group comprising a single token group, causing the output device to display the single token group on the output device; and
responsive to the column group comprising a plurality of token groups, causing the output device to display, on the output device, a first one of the token groups, and to display at least a subset of the remaining token groups in the column group as alternatives to the first token group.

12. The computer-implemented method of claim 11, further comprising:
for at least one column group comprising a plurality of token groups, causing the output device to display a menu comprising least one alternative token group from the column group.

13. The computer-implemented method of claim 9, wherein causing the output device to output the candidate interpretations comprises:
for each column group:
responsive to the column group comprising a single token group, causing the output device to display the single token group on the output device; and
responsive to the column group comprising a plurality of token groups, causing the output device to display, on the output device, a first one of the token groups in a visually distinctive manner as compared with the display of a column group comprising a single token group.

14. An electronic device including one or more processors, memory, and one or more programs stored in the memory and configured to be executed by the one or more processors, the one or more programs comprising instructions adapted to cause, when executed by the one or more processors, the one or more processors to carry out the following steps:
receiving a list of candidate interpretations of spoken input;
forming a grid of tokens from the received list, the grid being organized into a plurality of rows and a plurality of columns;
splitting the grid into a set of column groups based on timing information, each column group comprising a plurality of token groups, each token group comprising at least one token;
responsive to detecting duplicated token groups in the grid, removing the duplicated token groups to generate a consolidated grid; and
causing an output device to output the candidate interpretations based on the consolidated grid.

15. A non-transitory computer readable storage medium storing one or more programs configured for execution by a server system, the one or more programs comprising instructions adapted to cause, when executed by the server system, the server system to carry out the following steps:
receiving a list of candidate interpretations of spoken input;
forming a grid of tokens from the received list, the grid being organized into a plurality of rows and a plurality of columns;
splitting the grid into a set of column groups based on timing information, each column group comprising a plurality of token groups, each token group comprising at least one token;
responsive to detecting duplicated token groups in the grid, removing the duplicated token groups to generate a consolidated grid; and
causing an output device to output the candidate interpretations based on the consolidated grid.

## Patentansprüche

1. Ein computerimplementiertes Verfahren zum Erzeugen einer konsolidierten Liste von Spracherkennungsergebnissen, umfassend:
bei einem Prozessor, Empfangen einer Liste von Kandidateninterpretationen gesprochener Eingabe;
bei dem Prozessor, Bilden eines Rasters von Tokens aus der empfangenen Liste, wobei das Raster in eine Vielzahl von Reihen und eine Vielzahl von Spalten organisiert ist;
bei dem Prozessor, Aufteilen des Rasters in eine Menge von Spaltengruppen auf der Grundlage von Timing-Informationen,
wobei jede Spaltengruppe eine Vielzahl von Token-Gruppen umfasst, wobei jede Token-Gruppe mindestens einen Token umfasst;
bei dem Prozessor, in Antwort auf ein Erkennen von verdoppelten Token-Gruppen in dem Raster, Entfernen der verdoppelten Token-Gruppen, um ein konsolidiertes Raster zu erzeugen; und
Veranlassen einer Ausgabevorrichtung die Kandidateninterpretationen auszugeben auf der Grundlage des konsolidierten Rasters.

2. Computerimplementiertes Verfahren nach Anspruch 1, wobei jede Kandidateninterpretation der empfangenen Liste eine Vielzahl von Tokens umfasst, und wobei das Bilden eines Rasters von Tokens aus der empfangenen Liste umfasst:
bei dem Prozessor, für jedes Token in jeder Kandidateninterpretation, Bestimmen einer Startzeit und einer Endzeit;
bei dem Prozessor, Bilden einer Menge eindeutiger Ganzzahlen aus den bestimmten Start- und Endzeiten;
bei dem Prozessor: Bilden eines Rasters, welches eine Anzahl von Reihen umfasst, die der Anzahl von Kandidateninterpretationen der empfangenen Liste entspricht, wobei jede Reihe eine Anzahl von Zellen umfasst, die der Anzahl von eindeutigen Ganzzahlen aus der Menge eindeutiger Ganzzahlen entspricht, wobei die Zellen in Spalten organisiert sind; und
bei dem Prozessor, Einfügen eines jeden Tokens in alle Zellen, die von den Start- und Endzeiten des Tokens umfasst sind.

3. Computerimplementiertes Verfahren nach irgendeinem der Ansprüche 1 bis 2, wobei jede Kandidateninterpretation der empfangenen Liste eine Vielzahl von Tokens umfasst, die mit Start- und Endzeiten verknüpft sind, und wobei jede Spalte des Rasters mit einer Start- und Endzeit verknüpft ist, und wobei das Aufteilen des Rasters in eine Menge von Spaltengruppen auf der Grundlage der Timing-Informationen umfasst:
bei dem Prozessor, für jede Spalte des Rasters:
in Antwort darauf, dass die Spalte nicht bereits zu einer Spaltengruppe gehört, Bilden einer Spaltengruppe, einschließlich der aktuellen Spalte;
für jedes Token in der Spalte, Bestimmen ob jegliche Tokens in der Spalte verknüpft sind mit einer Endzeit, die sich jenseits der Endzeit der Spalte erstreckt; und
in Antwort auf jedes Token in der Spalte, das sich jenseits der Endzeit der Spalte erstreckt, Hinzufügen der nächsten Spalte zu der Spaltengruppe, die die aktuelle Spalte beinhaltet.

4. Computerimplementiertes Verfahren nach irgendeinem der Ansprüche 1 bis 3, wobei das Entfernen der verdoppelten Token-Gruppen zum Bilden des konsolidierten Rasters von Kandidateninterpretationen umfasst:
bei dem Prozessor, Definieren einer Vielzahl von Token-Sätzen, wobei jeder Token-Satz mindestens einen Token umfasst, der innerhalb einer Reihe einer Spaltengruppe erscheint; und
für jede Spaltengruppe in dem Raster:
Bestimmen, ob jegliche Token-Sätze verdoppelt sind innerhalb der Spaltengruppe; und
in Antwort auf jegliche Token-Sätze, die verdoppelt worden sind, Löschen der Verdoppelten.

5. Computerimplementiertes Verfahren nach irgendeinem der Ansprüche 1 bis 4, weiterhin umfassend:
bei dem Prozessor, in Antwort auf jegliche Rand-Token, die zwischen Token-Sätzen innerhalb einer Spaltengruppe geteilt werden, die mindestens zwei Tokens in all ihren Token-Sätzen aufweist, Aufteilen der Spaltengruppe in eine erste Spaltengruppe, die die geteilten Rand-Token umfasst, und eine zweite Spaltengruppe, die mindestens das übrigbleibende Token in den Token-Sätzen umfasst.

6. Computerimplementiertes Verfahren nach irgendeinem der Ansprüche 1 bis 5, weiterhin umfassend:
bei dem Prozessor, für jede Spaltengruppe, die mindestens zwei Tokens in all ihren Token-Sätzen aufweist:
in Antwort auf jegliche Tokens, die an dem Beginn aller Token-Sätze in der Spaltengruppe auftauchen, Aufteilen der Spaltengruppe in eine erste Spaltengruppe, die das erste Token umfasst, und eine zweite Spaltengruppe, die das mindestens eine übrigbleibende Token in den Token-Sätzen umfasst; und
in Antwort auf jegliche Tokens, die an dem Ende aller Token-Sätze der Spaltengruppe auftauchen, Aufteilen der Spaltengruppe in eine erste Spaltengruppe, die das letzte Token umfasst, und eine zweite Spaltengruppe, die das mindestens eine übrigbleibende Token der Token-Phrasen umfasst.

7. Computerimplementiertes Verfahren nach irgendeinem der Ansprüche 1 bis 6, weiterhin umfassend:
bei dem Prozessor, reagierend auf jegliche Spaltengruppe, die eine Anzahl von Token-Sätzen aufweist, die eine vorbestimmte Schwelle überschreitet:
Entfernen von mindestens einem Token-Satz; und
Wiederholen der Schritte des Aufteilens des Rasters und des Entfernens von Verdoppelten.

8. Computerimplementiertes Verfahren nach irgendeinem der Ansprüche 1 bis 7, wobei das Empfangen der Liste von Kandidateninterpretationen gesprochener Eingabe umfasst:
bei dem Prozessor, Empfangen einer Vielzahl von Kandidateninterpretationen in Token-Form, wobei jede Kandidateninterpretation eine Vielzahl von Token umfasst; und
bei dem Prozessor, Empfangen von Timing-Informationen für jedes Token.

9. Computerimplementiertes Verfahren nach irgendeinem der Ansprüche 1 bis 8, wobei das konsolidierte Raster von Kandidateninterpretationen umfasst:
mindestens eine Spaltengruppe, die eine einzelne Token-Gruppe aufweist; und
mindestens eine Spaltengruppe, die eine Vielzahl von Token-Gruppen aufweist.

10. Computerimplementiertes Verfahren nach Anspruch 9, wobei das Veranlassen der Ausgabevorrichtung zum Ausgeben der Kandidateninterpretationen umfasst:
für jede Spaltengruppe:
in Antwort darauf, dass die Spaltengruppe eine einzelne Token-Gruppe aufweist, Veranlassen der Ausgabevorrichtung, die einzelne Token-Gruppe auf der Ausgabevorrichtung anzuzeigen; und
in Antwort darauf, dass die Spaltengruppe eine Vielzahl von Token-Gruppen umfasst, Veranlassen der Ausgabevorrichtung, die Vielzahl von Token-Gruppen auf der Ausgabevorrichtung anzuzeigen.

11. Computerimplementiertes Verfahren nach Anspruch 9, wobei das Veranlassen der Ausgabevorrichtung die Kandidateninterpretationen auszugeben umfasst:
für jede Spaltengruppe:
in Antwort darauf, dass die Spaltengruppe eine einzelne Token-Gruppe umfasst, Veranlassen der Ausgabevorrichtung die einzelne Token-Gruppe auf der Ausgabevorrichtung anzuzeigen; und
in Antwort darauf, dass die Spaltengruppe eine Vielzahl von Token-Gruppen umfasst, Veranlassen der Ausgabevorrichtung auf der Ausgabevorrichtung eine erste der Token-Gruppen anzuzeigen und mindestens eine Untermenge der übrigen Token-Gruppen in den Spaltengruppen als Alternativen der ersten Spaltengruppe anzuzeigen.

12. Computerimplementiertes Verfahren nach Anspruch 11, weiterhin umfassend:
für mindestens eine Spaltengruppe, die eine Vielzahl von Token-Gruppen umfasst, Veranlassen der Ausgabevorrichtung ein Menü anzuzeigen, welches mindestens eine alternative Token-Gruppe aus der Spaltengruppe umfasst.

13. Computerimplementiertes Verfahren nach Anspruch 9, wobei das Veranlassen der Ausgabevorrichtung die Kandidateninterpretationen auszugeben umfasst:
für jede Spaltengruppe:
in Antwort darauf, dass die Spaltengruppe eine einzelne Token-Gruppe umfasst, Veranlassen der Ausgabevorrichtung, die einzelne Token-Gruppe auf der Ausgabevorrichtung anzuzeigen; und
in Antwort darauf, dass die Spaltengruppe eine Vielzahl von Token-Gruppen umfasst, Veranlassen der Ausgabevorrichtung auf der Ausgabevorrichtung eine erste der Token-Gruppen in einer visuell unterscheidbaren Weise anzuzeigen im Vergleich zu der Anzeige einer Spaltengruppe, die eine einzelne Token-Gruppe umfasst.

14. Eine elektronische Vorrichtung, die einen oder mehrere Prozessoren, Speicher und ein oder mehrere Programme, die in dem Speicher gespeichert sind und eingerichtet sind, um von dem einen oder den mehreren Prozessoren ausgeführt zu werden, beinhaltet, wobei das eine oder die mehreren Programme Befehle umfassen, die eingerichtet sind, um, wenn sie von dem einen oder den mehreren Prozessoren ausgeführt werden, den einen oder die mehreren Prozessoren zu veranlassen, die folgenden Schritte auszuführen:
Empfangen einer Liste von Kandidateninterpretationen gesprochener Eingabe;
Bilden eines Rasters von Tokens aus der empfangenen Liste, wobei das Raster organisiert ist in eine Vielzahl von Reihen und eine Vielzahl von Spalten;
Aufteilen des Rasters in eine Menge von Spaltengruppen basierend auf Timing-Informationen, wobei jede Spaltengruppe eine Vielzahl von Token-Gruppen umfasst, wobei jede Token-Gruppe mindestens ein Token umfasst;
in Antwort auf das Erkennen verdoppelter Gruppen in dem Raster, Entfernen der verdoppelten Token-Gruppen, um ein konsolidiertes Raster zu erzeugen; und
Veranlassen einer Ausgabevorrichtung, die Kandidateninterpretationen auf der Grundlage des konsolidierten Rasters auszugeben.

15. Ein nichtflüchtiges computerlesbares Speichermedium, auf dem ein oder mehrere Programme gespeichert sind, die eingerichtet sind zur Ausführung durch ein Serversystem, wobei das eine oder die mehreren Programme Befehle umfassen, die eingerichtet sind, wenn sie von dem Server-System ausgeführt werden, das Server-System veranlassen, die folgenden Schritte auszuführen:
Empfangen einer Liste von Kandidateninterpretationen gesprochener Eingabe;
Bilden eines Rasters von Tokens aus der empfangenen Liste, wobei das Raster in eine Vielzahl von Reihen und eine Vielzahl von Spalten organisiert ist;
Aufteilen des Rasters in eine Menge von Spaltengruppen auf der Grundlage von Timing-Informationen, wobei jede Spaltengruppe eine Vielzahl von Token-Gruppen umfasst, wobei jede Token-Gruppe mindestens ein Token umfasst;
in Antwort auf das Erkennen von verdoppelten Token-Gruppen in dem Raster, Entfernen der verdoppelten Token-Gruppen, um ein konsolidiertes Raster zu erzeugen; und
Veranlassen einer Ausgabevorrichtung, die Kandidateninterpretationen auf der Grundlage des konsolidierten Rasters auszugeben.

## Revendications

1. Un procédé mis en oeuvre par informatique pour générer une liste consolidée de résultats de reconnaissance de la parole, comprenant :
par un processeur, la réception d'une liste d'interprétations candidates d'une entrée parlée ;
par le processeur, la formation d'une grille de jetons à partir de la liste reçue, la grille étant organisée en une pluralité de lignes et une pluralité de colonnes ;
par le processeur, le fractionnement de la grille en un ensemble de groupes de colonnes à partir d'une information temporelle, chaque groupe de colonnes comprenant une pluralité de groupes de jetons, chaque groupe de jetons comprenant au moins un jeton ;
par le processeur, en réponse à la détection dans la grille de groupes de jetons dédoublés, l'élimination des groupes de jetons dédoublés pour générer une grille consolidée ; et
la délivrance en sortie par un dispositif de sortie à partir de la grille consolidée.

2. Le procédé mis en oeuvre par informatique de la revendication 1, dans lequel chaque interprétation candidate de la liste reçue comprend une pluralité de jetons, et dans lequel la formation d'une grille de jetons à partir de la liste reçue comprend :
par le processeur, pour chaque jeton de chaque interprétation candidate, la détermination d'un instant de début et d'un instant de fin ;
par le processeur, la formation d'un ensemble d'entiers uniques à partir des instants de début et de fin déterminés ;
par le processeur, la formation d'une grille comprenant un nombre de lignes correspondant au nombre d'interprétations candidates de la liste reçue, chaque ligne comprenant un nombre de cellules correspondant au nombre d'entiers uniques de l'ensemble d'entiers uniques, les cellules étant organisées en colonnes ; et
par le processeur, l'insertion de chaque jeton dans toutes les cellules s'étendant entre les instants de début et de fin du jeton.

3. Le procédé mis en oeuvre par informatique de l'une des revendications 1 à 2, dans lequel chaque interprétation candidate de la liste reçue comprend une pluralité de jetons associés à des instants de début et de fin, et dans lequel chaque colonne de la grille est associée à un instant de début et de fin, et dans lequel le fractionnement de la grille en un ensemble de groupes de colonnes à partir d'une information temporelle comprend :
par le processeur, pour chaque colonne de la grille :
en réponse au fait que la colonne n'appartient pas déjà à un groupe de colonnes, la formation d'un groupe de colonnes incluant la colonne courante ;
pour chaque jeton de la colonne, la détermination si des quelconques jetons de la colonne sont associés à un instant de fin qui se situe au-delà de l'instant de fin de la colonne ; et
en réponse au fait qu'un quelconque jeton de la colonne s'étend au-delà de l'instant de fin de la colonne, l'ajout de la colonne suivante au groupe de colonnes qui inclut la colonne courante.

4. Le procédé mis en oeuvre par informatique de l'une des revendications 1 à 3, dans lequel l'élimination des groupes de jetons dédoublés pour former la grille consolidée d'interprétations candidates comprend :
par le processeur, la définition d'une pluralité de phrases de jetons, chaque phrase de jeton comprenant au moins un jeton apparaissant dans une ligne d'un groupe de colonnes ; et
pour chaque groupe de colonnes de la grille :
la détermination si des quelconques phrases de jetons sont dédoublées à l'intérieur du groupe de colonnes ; et
en réponse au fait que des quelconques phrases de jetons sont dédoublées, la suppression des doublons.

5. Le procédé mis en oeuvre par informatique de l'une des revendications 1 à 4, comprenant en outre :
par le processeur, en réponse au fait que des quelconques jetons de bord sont partagés entre des phrases de jetons à l'intérieur d'un groupe de colonnes présentant au moins deux jetons dans toutes ses phrases de jetons, le fractionnement du groupe de colonnes en un premier groupe de colonnes comprenant les jetons de bord partagés et un second groupe de colonnes comprenant le au moins un jeton restant des phrases de jetons.

6. Le procédé mis en oeuvre par informatique de l'une des revendications 1 à 5, comprenant en outre :
par le processeur, pour chaque groupe de colonnes possédant au moins deux jetons dans toutes ses phrases de jetons :
en réponse au fait que des quelconques jetons apparaissent au début de toutes les phrases de jetons dans le groupe de colonnes, le fractionnement du groupe de colonnes en un premier groupe de colonnes comprenant le premier jeton et un second groupe de colonnes comprenant le au moins un jeton restant des phrases de jetons ; et
en réponse au fait que des quelconques jetons apparaissent à la fin de toutes les phrases de jetons dans le groupe de colonnes, le fractionnement du groupe de colonnes en un premier groupe de colonnes comprenant le dernier jeton et un second groupe de colonnes comprenant le au moins un jeton restant dans les phrases de jetons.

7. Le procédé mis en oeuvre par informatique de l'une des revendications 1 à 6, comprenant en outre :
par le processeur, en réponse au fait qu'un quelconque groupe de colonnes présente un nombre de phrases de jetons dépassant un seuil prédéterminé :
l'élimination d'au moins une phrase de jeton ; et
la répétition des étapes de fractionnement de la grille et d'élimination des doublons.

8. Le procédé mis en oeuvre par informatique de l'une des revendications 1 à 7, dans lequel la réception de la liste d'interprétations candidates d'une entrée parlée comprend :
par le processeur, la réception d'une pluralité d'interprétations candidates mises en jetons, chaque interprétation candidate comprenant une pluralité de jetons ; et
par le processeur, la réception d'une information temporelle pour chaque jeton.

9. Le procédé mis en oeuvre par informatique de l'une des revendications 1 à 8, dans lequel la grille consolidée d'interprétations candidates comprend :
au moins un groupe de colonnes avec un unique groupe de jetons ; et
au moins un groupe de colonnes avec une pluralité de groupes de jetons.

10. Le procédé mis en oeuvre par informatique de la revendication 9, dans lequel la délivrance en sortie par le dispositif de sortie des interprétations candidates comprend :
pour chaque groupe de colonnes :
en réponse au fait que le groupe de colonnes comprend un unique groupe de jetons, l'affichage par le dispositif de sortie de l'unique groupe de jetons sur le dispositif de sortie ; et
en réponse au fait que le groupe de colonnes comprend une pluralité de groupes de jetons, l'affichage par le dispositif de sortie de la pluralité de groupes de jetons sur le dispositif de sortie.

11. Le procédé mis en oeuvre par informatique de la revendication 9, dans lequel la délivrance en sortie par le dispositif de sortie des interprétations candidates comprend :
pour chaque groupe de colonnes :
en réponse au fait que le groupe de colonnes comprend un unique groupe de jetons, l'affichage par le dispositif de sortie de l'unique groupe de jetons sur le dispositif de sortie ; et
en réponse au fait que le groupe de colonnes comprend une pluralité de groupes de jetons, l'affichage par le dispositif de sortie, sur le dispositif de sortie, d'un premier des groupes de jetons, et l'affichage d'au moins un sous-ensemble des groupes de jetons restants dans le groupe de colonnes en tant qu'alternatives au premier groupe de jetons.

12. Le procédé mis en oeuvre par informatique de la revendication 11, comprenant en outre :
pour au moins un groupe de colonnes comprenant une pluralité de groupes de jetons, l'affichage par le dispositif de sortie d'un menu comprenant en tant qu'alternative au moins un groupe de jetons provenant du groupe de colonnes.

13. Le procédé mis en oeuvre par informatique de la revendication 9, dans lequel la délivrance en sortie par le dispositif de sortie des interprétations candidates comprend :
pour chaque groupe de colonnes :
en réponse au fait que le groupe de colonnes comprend un unique groupe de jetons, l'affichage par le dispositif de sortie de l'unique groupe de jetons sur le dispositif de sortie ; et
en réponse au fait que le groupe de colonnes comprend une pluralité de groupes de jetons, l'affichage par le dispositif de sortie, sur le dispositif de sortie, d'un premier des groupes de jetons d'une manière visuellement distincte par rapport à l'affichage d'un groupe de colonnes comprenant un unique groupe de jetons.

14. Un dispositif électronique comprenant un ou plusieurs processeurs, de la mémoire, et un ou plusieurs programmes stockés dans la mémoire et configurés pour être exécutés par les un ou plusieurs processeurs, les un ou plusieurs programmes comprenant des instructions aptes à faire en sorte, lorsqu'elles sont exécutées par les un ou plusieurs processeurs, que les un ou plusieurs processeurs mettent en oeuvre les étapes suivantes :
réception d'une liste d'interprétations candidates d'une entrée parlée ;
formation d'une grille de jetons à partir de la liste reçue, la grille étant organisée en une pluralité de lignes et une pluralité de colonnes ;
fractionnement de la grille en un ensemble de groupes de colonnes à partir d'une information temporelle, chaque groupe de colonnes comprenant une pluralité de groupes de jetons, chaque groupe de jetons comprenant au moins un jeton ;
en réponse à la détection dans la grille de groupes de jetons dédoublés, élimination des groupes de jetons dédoublés pour générer une grille consolidée ; et
délivrance en sortie par un dispositif de sortie à partir de la grille consolidée.

15. Un support non provisoire de stockage lisible par calculateur stockant un ou plusieurs programmes configurés pour être exécutés par un système serveur, les un ou plusieurs programmes comprenant des instructions aptes à faire en sorte, lorsqu'elles sont exécutées par le système serveur, que le système serveur met en oeuvre les étapes suivantes :
réception d'une liste d'interprétations candidates d'une entrée parlée ;
formation d'une grille de jetons à partir de la liste reçue, la grille étant organisée en une pluralité de lignes et une pluralité de colonnes ;
fractionnement de la grille en un ensemble de groupes de colonnes à partir d'une information temporelle,
chaque groupe de colonnes comprenant une pluralité de groupes de jetons, chaque groupe de jetons comprenant au moins un jeton ;
en réponse à la détection dans la grille de groupes de jetons dédoublés, élimination des groupes de jetons dédoublés pour générer une grille consolidée ; et
délivrance en sortie par un dispositif de sortie à partir de la grille consolidée.
